(19) **Europäisches Patentamt / European Patent Office / Office européen des brevets**

(11) **EP 4 716 131 A1**

(12) **EUROPEAN PATENT APPLICATION**

(43) Date of publication:
25.03.2026 Bulletin 2026/13

(21) Application number: 26156487.6

(22) Date of filing: 23.09.2020

(51) International Patent Classification (IPC):
*H04L 1/1829* (2023.01)    *H04L 5/00* (2006.01)
*H04W 74/06* (2009.01)    *H04W 74/0836* (2024.01)

(52) Cooperative Patent Classification (CPC):
**H04L 1/1854; H04L 5/0055; H04L 5/0094;**
**H04W 74/0836;** H04L 5/001; H04L 5/0051

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: 24.09.2019 PCT/CN2019/107610

(62) Document number(s) of the earlier application(s) in
accordance with Art. 76 EPC:
**20868131.2 / 4 035 488**

(71) Applicant: **Telefonaktiebolaget LM Ericsson**
**(publ)**
**164 83 Stockholm (SE)**

(72) Inventors:
• **Lin, Zhipeng**
**Nanjing (CN)**
• **Falahati, Sorour**
**Stockholm (SE)**

• **Harrison, Robert Mark**
**Grapevine (US)**
• **Rune, Johan**
**LIDINGÖ (SE)**
• **Christoffersson, Jan**
**LULEÅ (SE)**
• **Enbuske, Henrik**
**STOCKHOLM (SE)**
• **Sedin, Jonas**
**Sollentuna (SE)**

(74) Representative: **Ericsson**
**Patent Development**
**Torshamnsgatan 21-23**
**164 80 Stockholm (SE)**

Remarks:
This application was filed on 05-02-2026 as a
divisional application to the application mentioned
under INID code 62.

(54) **METHOD AND APPARATUS FOR RANDOM ACCESS PROCEDURE**

(57) Various embodiments of the present disclosure provide a method for random access. The method which may be performed by a terminal device comprises receiving resource configuration information from a network node. The method further comprises determining an uplink resource for a feedback to a response message from the network node in a two-step random access procedure, based on the received resource configuration information.

410

```
receive resource configuration information from a
network node                                         412

determine an uplink resource for a feedback to a
response message from the network node in a two-
step random access procedure, based on the received
resource configuration information                   414
```

Fig.4A

EP 4 716 131 A1

**Description**

FIELD OF THE INVENTION

The present disclosure generally relates to communication networks, and more specifically, to method and apparatus for random access procedure.

BACKGROUND

This section introduces aspects that may facilitate a better understanding of the disclosure. Accordingly, the statements of this section are to be read in this light and are not to be understood as admissions about what is in the prior art or what is not in the prior art.

Communication service providers and network operators have been continually facing challenges to deliver value and convenience to consumers by, for example, providing compelling network services and performance. With the rapid development of networking and communication technologies, wireless communication networks such as long-term evolution (LTE) and new radio (NR) networks are expected to achieve high traffic capacity and end-user data rate with lower latency. In order to connect to a network node, a random access (RA) procedure may be initiated for a terminal device. In the RA procedure, a feedback, such as a hybrid automatic repeat request (HARQ) feedback, may be transmitted from the terminal device to the network node. The RA procedure can enable the terminal device to establish a session for a specific service with the network node.

SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

A wireless communication network such as the fifth generation (5G)/ New radio (NR) network may be able to support flexible network configuration. Various signaling approaches (e.g., a four-step approach, a two-step approach, etc.) may be used for a RA procedure of a terminal device to set up a connection with a network node. In a two-step RA procedure, the terminal device can transmit a RA preamble together with the physical uplink shared channel (PUSCH) in a message (which is also known as message A or msgA for short) to the network node, and receive a response message (which is also known as message B or msgB for short) from the network node.

Various embodiments of the present disclosure propose a solution for RA, which can improve latency and provide better responsiveness for a RA procedure such as a two-step RA procedure, for example, by enabling resource allocation for multiple feedbacks, so as to increase the transmission efficiency.

It can be realized that the terms "PRACH occasion", "random access channel (RACH) occasion" or "RA occasion" mentioned herein refers to a time-frequency resource usable for the preamble transmission in a RA procedure, which may also be referred to as "random access occasion (RO)". These terms may be used interchangeably in this document.

Similarly, it can be realized that the terms "PUSCH occasion", "uplink shared channel occasion" or "shared channel occasion" mentioned herein refers to a time-frequency resource usable for PUSCH transmission in a RA procedure, which may also be referred to as "physical uplink shared channel occasion (PO)". These terms may be used interchangeably in this document.

According to a first aspect of the present disclosure, there is provided a method performed by a terminal device such as a user equipment (UE). The method may comprise receiving resource configuration information from a network node. The method may further comprise determining an uplink (UL) resource for a feedback to a response message from the network node in a two-step random access procedure, based on the received resource configuration information.

In accordance with some exemplary embodiments, the method may further comprise transmitting the feedback on the determined UL resource.

In accordance with some exemplary embodiments, the resource configuration information may comprise at least one of: at least one parameter of a broadcast message, at least one parameter of Physical Downlink Control Channel (PDCCH), at least one parameter of Physical Downlink Shared Channel (PDSCH), and at least one parameter of the response message.

In accordance with some exemplary embodiments, the feedback may comprise a Hybrid Automatic Repeat reQuest (HARQ) feedback.

In accordance with some exemplary embodiments, the UL resource may be a Physical Uplink Control Channel (PUCCH) resource.

In accordance with some exemplary embodiments, the response message may comprise two or more responses which are multiplexed, the two or more responses may comprise at least one of a success response and a fallback response.

In accordance with some exemplary embodiments, the resource configuration information may comprise at least one set of Downlink Control Information (DCI) parameters.

In accordance with some exemplary embodiments, each set of DCI parameters may be preceded by a bit indicating a presence of the set of DCI parameters.

In accordance with some exemplary embodiments, the resource configuration information may comprise two or more sets of DCI parameters, each of the sets of DCI parameters other than the first set of DCI parameters may be defined by an offset with respect to a previous set of DCI parameters for another terminal device.

In accordance with some exemplary embodiments, the two or more responses may be intended for two or more terminal devices respectively, the resource configuration information may indicate a set of cyclic shift indexes, and the set of cyclic shift indexes may be able to be used by the two or more terminal devices with the two or more responses multiplexed on one PDSCH.

In accordance with some exemplary embodiments, the method may further comprise: extending the amount of cyclic shift indexes in the set of cyclic shift indexes if the amount of cyclic shift indexes is less than the amount of the terminal devices.

In accordance with some exemplary embodiments, the feedbacks of the two or more terminal devices may be able to be identified by at least one of the following:

- Demodulation Reference Signals;

- an order of inclusion of the two or more terminal devices' respective information records in the response message;

- a preamble identifier, ID;

- a Physical Uplink Shared Channel, PUSCH, resource unit;

- a contention resolution ID; and

- a terminal device ID.

In accordance with some exemplary embodiments, the two or more responses may be intended for two or more terminal devices respectively, and the two or more terminal devices may transmit feedbacks on a same PUCCH resource.

In accordance with some exemplary embodiments, the feedbacks of the two or more terminal devices may be able to be identified by at least one of the following:

- different Demodulation Reference Signals;

- the order of inclusion of the two or more terminal devices' respective information records in the response message;

- the preamble ID;

- the PUSCH resource unit;

- the contention resolution ID; and

- the terminal device ID.

In accordance with some exemplary embodiments, the response message may comprise one success response or fallback response, and the resource configuration information may comprise at least one of the following:

- at least one DCI parameter; and

- at least one parameter of a broadcast message.

In accordance with some exemplary embodiments, the resource configuration information may comprise at least one of the following:

- (a) a PUCCH resource indicator, and a PDSCH-to-HARQ_feedback timing indicator;

- (b) a PDSCH-to-HARQ_feedback timing indicator, and a pucch-ResourceCommon configuration;

- (c) a pucch-ResourceCommon information element; and

- (d) a response window size, and a system frame number.

In accordance with some exemplary embodiments, the UL resource may be a PUSCH resource.

In accordance with some exemplary embodiments, the response may be a random access response.

According to a second aspect of the present disclosure, there is provided an apparatus which may be implemented as a terminal device. The apparatus comprises one or more processors and one or more memories comprising computer program codes. The one or more memories and the computer program codes are configured to, with the one or more processors, cause the apparatus at least to perform any step of the method according to the first aspect of the present disclosure.

According to a third aspect of the present disclosure, there is provided a computer-readable medium having computer program codes embodied thereon which, when executed on a computer, cause the computer to perform any step of the method according to the first aspect of the present disclosure.

According to a fourth aspect of the present disclosure, there is provided an apparatus which may be implemented as a terminal device. The apparatus may comprise a receiving unit and a determining unit. In accordance with some exemplary embodiments, the receiving unit is operable to carry out at least the step of receiving resource configuration information from a network node in the method according to the first aspect of the present disclosure. The determining unit is operable to carry out at least the step of determining an UL resource for a feedback to a response message from the network node in a two-step random access procedure, based on the received resource configuration information in the method according to the first aspect of the present disclosure.

According to a fifth aspect of the present disclosure, there is provided a method performed by a network node such as a base station. The method may comprise determining resource configuration information. The resource configuration information may indicate an UL resource for a feedback of a terminal device to a response message in a two-step random access procedure. The method may further comprise transmitting the resource configuration information to the terminal device.

In accordance with some exemplary embodiments, the method according to the fifth aspect of the present disclosure may further comprise: receiving a feedback on the UL resource which is determined by the terminal device.

According to a sixth aspect of the present disclosure, there is provided an apparatus which may be implemented as a network node. The apparatus comprises one or more processors and one or more memories comprising computer program codes. The one or more memories and the computer program codes are configured to, with the one or more processors, cause the apparatus at least to perform any step of the method according to the fifth aspect of the present disclosure.

According to a seventh aspect of the present disclosure, there is provided a computer-readable medium having computer program codes embodied thereon which, when executed on a computer, cause the computer to perform any step of the method according to the fifth aspect of the present disclosure.

According to an eighth aspect of the present disclosure, there is provided an apparatus which may be implemented as a network node. The apparatus may comprise a determining unit and a transmitting unit. In accordance with some exemplary embodiments, the determining unit is operable to carry out at least the determining step in the method according to the fifth aspect of the present disclosure. The transmitting unit is operable to carry out at least the transmitting step in the method according to the fifth aspect of the present disclosure.

BRIEF DESCRIPTION OF THE DRAWINGS

The disclosure itself, the preferable mode of use and further objectives are best understood by reference to the following detailed description of the embodiments when read in conjunction with the accompanying drawings, in which:

Fig. 1A is a diagram illustrating an exemplary four-step RA procedure according to an embodiment of the present disclosure;

Fig. 1B is a diagram illustrating an exemplary two-step RA procedure according to an embodiment of the present disclosure;

Figs. 2A-2D are diagrams illustrating some exemplary formats for transmitting random access response (RAR) according to some embodiments of the present disclosure;

Fig. 3A is a diagram illustrating an exemplary PUCCH resource sets before dedicated PUCCH resource configuration according to some embodiments of the present disclosure;

Fig. 3B is a diagram illustrating an exemplary mapping of PDSCH-to-HARQ feedback timing indicator field values to numbers of slots according to some embodiments of the present disclosure;

Fig. 4A is a flowchart illustrating a method according to some embodiments of the present disclosure;

Fig. 4B is a flowchart illustrating a further step of the method as shown in Fig. 4A according to some embodiments of the present disclosure;

Fig. 5A is a flowchart illustrating another method according to some embodiments of the present disclosure;

Fig. 5B is a flowchart illustrating a further step of the method as shown in Fig. 5A according to some embodiments of the present disclosure;

Fig. 6A is a block diagram illustrating an apparatus according to some embodiments of the present disclosure;

FIG. 6B is a block diagram showing a terminal device according to an embodiment of the disclosure;

FIG. 6C is a block diagram showing a base station according to an embodiment of the disclosure;

Fig. 7 is a block diagram illustrating a telecommunication network connected via an intermediate network to a host computer in accordance with some embodiments of the present disclosure;

Fig. 8 is a block diagram illustrating a host computer communicating via a base station with a UE over a partially wireless connection in accordance with some embodiments of the present disclosure;

Fig. 9 is a flowchart illustrating a method implemented in a communication system, in accordance with an embodiment of the present disclosure;

Fig. 10 is a flowchart illustrating a method implemented in a communication system, in accordance with an embodiment of the present disclosure;

Fig. 11 is a flowchart illustrating a method implemented in a communication system, in accordance with an embodiment of the present disclosure; and

Fig. 12 is a flowchart illustrating a method implemented in a communication system, in accordance with an embodiment of the present disclosure.

DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all of the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

As used herein, the term "communication network" refers to a network following any suitable communication standards, such as new radio (NR), long term evolution (LTE), LTE-Advanced, wideband code division multiple access (WCDMA), high-speed packet access (HSPA), and so on. Furthermore, the communications between a terminal device and a network node in the communication network may be performed according to any suitable generation communication protocols, including, but not limited to, the first generation (1G), the second generation (2G), 2.5G, 2.75G, the third generation (3G), 4G, 4.5G, 5G communication protocols, and/or any other protocols either currently known or to be developed in the future.

The term "network node" refers to a network device in a communication network via which a terminal device accesses to the network and receives services therefrom. The network node may refer to a base station (BS), an access point (AP), a multi-cell/multicast coordination entity (MCE), a controller or any other suitable device in a wireless communication network. The BS may be, for example, a node B (NodeB or NB), an evolved NodeB (eNodeB or eNB), a next generation NodeB (gNodeB or gNB), a remote radio unit (RRU), a radio header (RH), a remote radio head (RRH), a relay, a low power node such as a femto, a pico, and so forth.

Yet further examples of the network node comprise multi-standard radio (MSR) radio equipment such as MSR BSs, network controllers such as radio network controllers (RNCs) or base station controllers (BSCs), base transceiver stations (BTSs), transmission points, transmission nodes, positioning nodes and/or the like. More generally, however, the network node may represent any suitable device (or group of devices) capable, configured, arranged, and/or operable to enable and/or provide a terminal device access to a wireless communication network or to provide some service to a terminal device that has accessed to the wireless communication network.

The term "terminal device" refers to any end device that can access a communication network and receive services therefrom. By way of example and not limitation, the terminal device may refer to a mobile terminal, a user equipment (UE), or other suitable devices. The UE may be, for example, a subscriber station, a portable subscriber station, a mobile station (MS) or an access terminal (AT). The terminal device may include, but not limited to, portable computers, image capture terminal devices such as digital cameras, gaming terminal devices, music storage and playback appliances, a mobile phone, a cellular phone, a smart phone, a tablet, a wearable device, a personal digital assistant (PDA), a vehicle, and the like.

As yet another specific example, in an Internet of things (IoT) scenario, a terminal device may also be called an IoT device and represent a machine or other device that performs monitoring, sensing and/or measurements etc., and transmits the results of such monitoring, sensing and/or measurements etc. to another terminal device and/or a network equipment. The terminal device may in this case be a machineto-machine (M2M) device, which may in a 3rd generation partnership project (3GPP) context be referred to as a machine-type communication (MTC) device.

As one particular example, the terminal device may be a UE implementing the 3GPP narrow band Internet of things (NB-IoT) standard. Particular examples of such machines or devices are sensors, metering devices such as power meters, industrial machinery, or home or personal appliances, e.g. refrigerators, televisions, personal wearables such as watches etc. In other scenarios, a terminal device may represent a vehicle or other equipment, for example, a medical instrument that is capable of monitoring, sensing and/or reporting etc. on its operational status or other functions associated with its operation.

As used herein, the terms "first", "second" and so forth refer to different elements. The singular forms "a" and "an" are intended to include the plural forms as well, unless the context clearly indicates otherwise. The terms "comprises", "comprising", "has", "having", "includes" and/or "including" as used herein, specify the presence of stated features, elements, and/or components and the like, but do not preclude the presence or addition of one or more other features, elements, components and/or combinations thereof. The term "based on" is to be read as "based at least in part on". The term "one embodiment" and "an embodiment" are to be read as "at least one embodiment". The term "another embodiment" is to be read as "at least one other embodiment". Other definitions, explicit and implicit, may be included below.

Wireless communication networks are widely deployed to provide various telecommunication services such as voice, video, data, messaging and broadcasts. As described previously, in order to connect to a network node such as a gNB in a wireless communication network, a terminal device such as a UE may need to perform a RA procedure to exchange essential information and messages for communication link establishment with the network node.

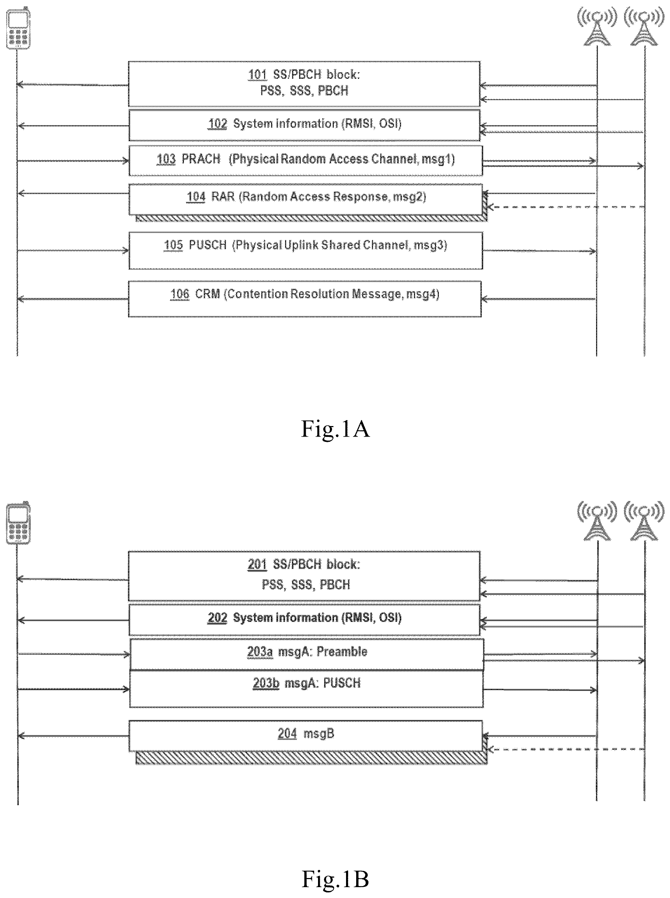

Fig. 1A is a diagram illustrating an exemplary four-step RA procedure according to an embodiment of the present disclosure. As shown in Fig. 1A, a UE can detect a synchronization signal (SS) by receiving 101 a synchronization signal and a physical broadcast channel block (which is also known as a SS/PBCH block or SSB for short) from a gNB, for example, including a primary synchronization signal (PSS), a secondary synchronization signal (SSS), and a physical broadcast channel (PBCH). The UE can decode 102 some system information (e.g., remaining minimum system information (RMSI) and other system information (OSI)) broadcasted in the downlink (DL). Then the UE can transmit 103 a PRACH preamble (message1/msg1) in the uplink (UL). The gNB can reply 104 with a random access response (RAR, message2/msg2). In response to the RAR from the gNB, the UE can transmit 105 the UE's identification information (message3/msg3) on PUSCH. Then the gNB can send 106 a contention resolution message (CRM, message4/msg4) to the UE. In some cases, the PRACH preamble (message1/msg1) may be reattempted by the UE and different preambles can be selected for the initial transmission and its subsequent retransmission(s). Parameters such as PREAMBLE_TRANSMISSION_COUNTER and PREAMBLE_POWER_RAMPING_COUNTER can be maintained on the UE side for different transmissions of the preambles.

In the exemplary procedure shown in Fig. 1A, the UE can transmit message3/msg3 on PUSCH after receiving a timing advance command in the RAR, allowing message3/msg3 on PUSCH to be received with timing accuracy within a cyclic prefix (CP). Without this timing advance, a very large CP may be needed in order to be able to demodulate and detect message3/msg3 on PUSCH, unless the communication system is applied in a cell with very small distance between the UE and the gNB. Since a NR system can also support larger cells with a need for providing a timing advance command to the UE, the four-step approach is needed for the RA procedure.

Fig. 1B is a diagram illustrating an exemplary two-step RA procedure according to an embodiment of the present disclosure. Similar to the procedure as shown in Fig.1A, in the procedure as shown in Fig. 1B, a UE can detect a SS by receiving 201 a SS/PBCH block (e.g., comprising PSS, SSS and PBCH) from a gNB, and decode 202 system information (e.g., comprising RMSI and OSI) broadcasted in the DL. Compared to the four-step RA procedure as shown in Fig. 1A, the UE performing the procedure in Fig. 1B can complete random access in only two steps. Firstly, the UE sends 203a/203b to the gNB a message A (msgA) including RA preamble together with higher layer data such as a radio resource control (RRC) connection request possibly with some small payload on PUSCH. Secondly, the gNB sends 204 to the UE a RAR (also called message B or msgB) including a UE identifier assignment, timing advance information, a contention resolution message, and etc. In addition, message B (msgB) may contain a higher layer part, e.g. an RRC message, which probably will be transmitted in a separate transmission from the RAR.

Nowadays, the definition of msgB is very vague and it may be subject to further changes in RAN2. The most updated explanation on this topic from RAN2 is that msgB is a response to msgA, which may contain contention resolution message(s), fallback indication(s) to schedule MSG3 transmission, and a backoff indication. Any higher layer information, e.g., corresponding to the content of msg4 in the four-step RA, would thus be transmitted in separate message(s). However, since this "definition" of msgB cannot safely be regarded as stable, we may use another definition herein, which is well adapted to the description of the present disclosure. Mapping to the above described msgB's definition from RAN2 and any changes thereof should however be straightforward.

To this end, the following msgB terminology, i.e. there are up to two distinct parts of a msgB, may be used herein:

1) a MAC layer part (may be referred to as "the first part" hereinafter), which indicates success reception of the msgA ("a success RAR", including a contention resolution ID and timing advance information) or indicates fallback to the four-step RA ("a fallback RAR");

2) a higher layer part (may be referred to as "the second part" hereinafter), typically consisting of an RRC message. The second part of the msgB is only transmitted in case the first part is the success RAR and even then, it may be omitted if the UE is in an RRC_CONNECTED state.

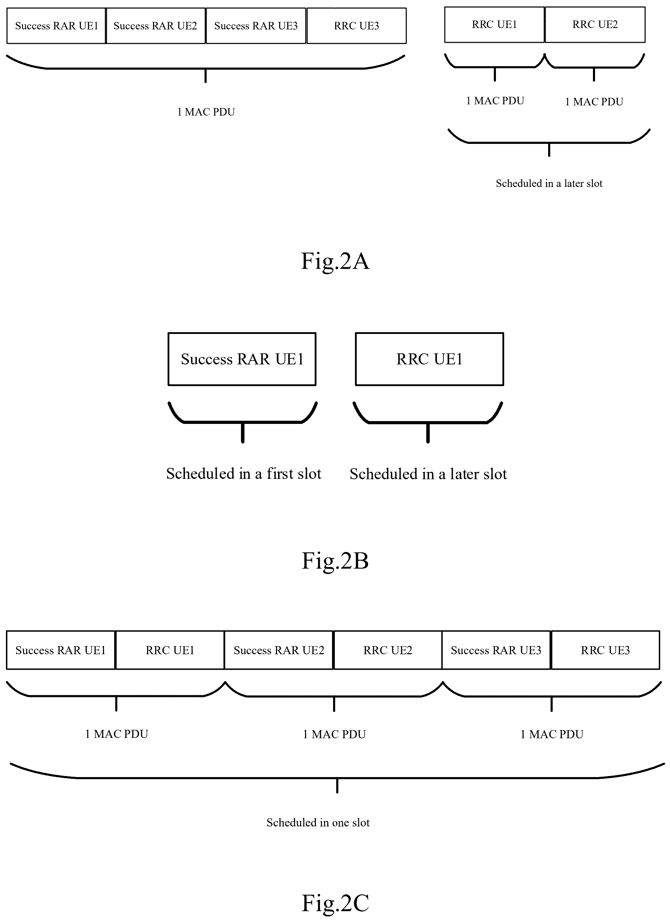

There are currently different options on the table in 3GPP for how to transmit these two parts of msgB. Figs. 2A-2D are diagrams illustrating some exemplary formats for transmitting RAR according to some embodiments of the present disclosure.

As shown in Fig. 2A, multiple success RARs/fallback RARs (i.e. multiple first parts) are multiplexed in one first MAC PDU. If the second part (the higher layer part) is transmitted, one of them may be included in this first MAC PDU, but the remaining ones may be transmitted in subsequent MAC PDU(s) with a single second part in each MAC PDU (i.e. no multiplexing of second parts in the same MAC PDU). In this case, the Radio Network Temporary Identifier (RNTI) for the multiplexed success RARs/fallback RARs may be common for all UEs. An example of this would be the Release 15 (i.e., Rel-15) RA-RNTI for four-step when the UEs transmit the preambles on the PRACH occasions corresponding to a same RA-RNTI value.

As shown in Fig. 2B, only a single success RAR/fallback RAR is transmitted in a first slot or MAC PDU. If the second part (the higher layer part) is transmitted, it is transmitted separately in a subsequently transmitted slot or MAC PDU of its own.

As shown in Fig. 2C, the two msgB parts are transmitted together in a single MAC PDU for a single UE. In this case, it is preferable that the MAC PDUs for different UEs are addressed to different RNTIs to enable per UE multiplexing.

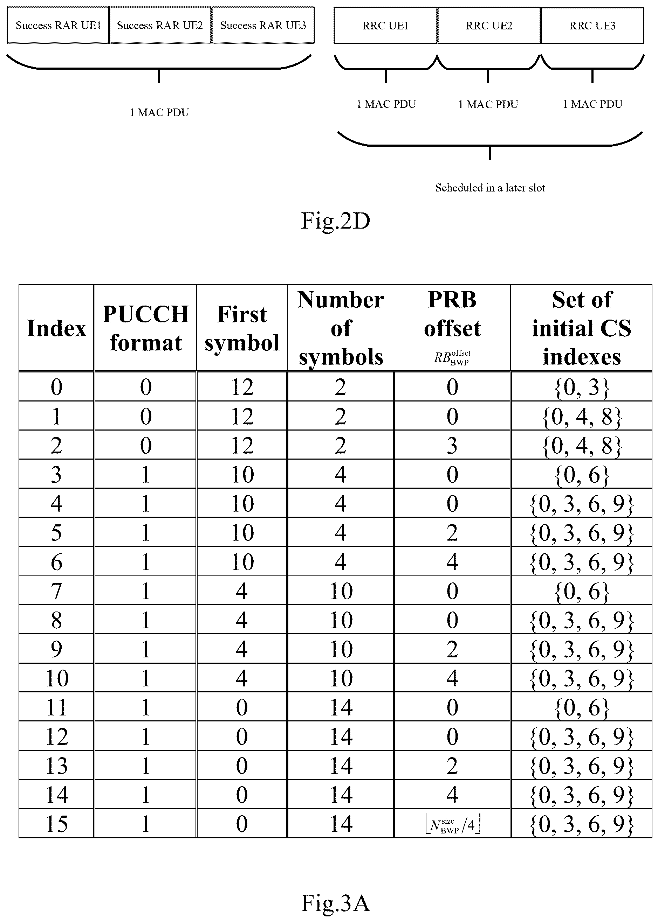

As shown in Fig. 2D, multiple success RARs/fallback RARs (i.e. multiple first parts) in the msgB only contains the first parts of success RARs and/or fallback RARs. If the second parts (the higher layer part) are transmitted, they may be scheduled in subsequent slots. The difference between this format and the format as shown in Fig. 2A is that, in Fig. 2A, the second part (e.g. the RRC message) of one of the targeted UEs may be included in the first MAC PDU, whereas no second part is allowed/possible to be included in the first MAC PDU in the format of Fig. 2D.

In NR Release 15, in 3GPP TS 38.213 V15.6.0 section 8.4, the HARQ feedback to the PDSCH carrying msg4 is described.

In response to a PUSCH transmission scheduled by a RAR UL grant when a UE has not been provided with a Cell-RNTI, the UE attempts to detect a DCI format 1_0 with CRC scrambled by a corresponding Temporary Cell-RNTI (TC-RNTI) scheduling a PDSCH that includes a UE contention resolution identity [as described in TS 38.321]. In response to the PDSCH reception with the UE contention resolution identity, the UE transmits HARQ-acknowledgement (ACK) information in a PUCCH. The PUCCH transmission is within a same active UL bandwidth part (BWP) as the PUSCH transmission. A minimum time between the last symbol of the PDSCH reception and the first symbol of the corresponding PUCCH transmission with the HARQ-ACK information is equal to $N_{T,1}$ + 0. 5 msec. Here, $N_{T,1}$ is a time duration of $N_1$ [as described in 3GPP TS 38.214 V15.6.0] symbols corresponding to a PDSCH reception time for UE processing capability 1 when additional PDSCH demodulation reference signal (DM-RS) is configured. For $\mu$ = 0 [ $\mu$ is described in 3GPP TS 38.211 V15.6.0], the UE assumes $N_{1,0}$ = 14 [as described in TS 38.214].

In 3GPP TS38.213 V15.6.0, section 9.2.1 states as below for the PUCCH resource set determination when no dedicated PUCCH resource is available.

Fig. 3A is a diagram illustrating Table 9.2.1-1 in 3GPP TS38.213 V15.6.0, which is an exemplary PUCCH resource sets before dedicated PUCCH resource configuration according to some embodiments of the present disclosure. If a UE does not have dedicated PUCCH resource configuration, provided by PUCCH-ResourceSet in PUCCH-Config, a PUCCH resource set is provided by an information element (IE) pucch-ResourceCommon through an index to a row of Fig. 3A for transmission of HARQ-ACK information on PUCCH in an initial UL BWP of $N_{\mathrm{BWP}}^{\mathrm{size}}$ physical reference blocks (PRBs). $N_{\mathrm{BWP}}^{\mathrm{size}}$ defines the number of PRBs in a BWP, i.e. the BWP size. BWP is short for bandwidth part, which is a part of band used by one UE. The PUCCH resource set includes sixteen resources, each corresponding to a PUCCH format, a first symbol, a duration, a PRB offset $RB_{\mathrm{BWP}}^{\mathrm{offset}}$, and a cyclic shift index set for a PUCCH transmission. The UE transmits a PUCCH using frequency hopping. An orthogonal cover code with index 0 is used for a PUCCH resource with PUCCH format 1 in Table 9.2.1-1. The UE transmits the PUCCH using the same spatial domain transmission filter as for a PUSCH transmission scheduled by a RAR UL grant as described in Subclause 8.3.

The IE pucch-ResourceCommon is defined as below in 38.331 V15.6.0, which is used to configure the cell specific PUCCH parameters.

## PUCCH-ConfigCommon information element

```
-- ASN1START
-- TAG-PUCCH-CONFIGCOMMON-START

PUCCH-ConfigCommon ::=            SEQUENCE {
    pucch-ResourceCommon              INTEGER (0..15)                          OPTIONAL,
-- Cond InitialBWP-Only
    pucch-GroupHopping                ENUMERATED { neither, enable, disable },
    hoppingId                     INTEGER (0..1023)                        OPTIONAL,  -
- Need R
    p0-nominal                      INTEGER (-202..24)                       OPTIONAL,
-- Need R
    ...
}

-- TAG-PUCCH-CONFIGCOMMON-STOP
-- ASN1STOP
```

| ***PUCCH-ConfigCommon* field descriptions** |
| --- |
| **hoppingId**<br>Cell-specific scrambling ID for group hopping and sequence hopping if enabled, see TS 38.211 [16], clause 6.3.2.2. |
| **p0-nominal**<br>Power control parameter PO for PUCCH transmissions. Value in dBm. Only even values (step size 2) allowed (see TS 38.213 [13], clause 7.2). |
| **pucch-GroupHopping**<br>Configuration of group- and sequence hopping for all the PUCCH formats 0, 1, 3 and 4. Value *neither* implies neither group or sequence hopping is enabled. Value *enable* enables group hopping and disables sequence hopping. Value *disable* disables group hopping and enables sequence hopping (see TS 38.211 [16], clause 6.3.2.2). |

(continued)

> ***pucch-ResourceCommon***
> An entry into a 16-row table where each row configures a set of cell-specific PUCCH resources/parameters. The UE uses those PUCCH resources until it is provided with a dedicated *PUCCH-Config* (e.g. during initial access) on the initial uplink BWP. Once the network provides a dedicated *PUCCH-Config* for that bandwidth part the UE applies that one instead of the one provided in this field (see TS 38.213 [13], clause 9.2).

| Conditional Presence | Explanation |
|---|---|
| *InitialBWP-Only* | The field is mandatory present in the *PUCCH-ConfigCommon* of the initial BWP (BWP#0) in SIB1. It is absent in other BWPs. |

If a UE is not provided with pdsch-HARQ-ACK-Codebook, the UE generates at most one HARQ-ACK information bit.

If the UE provides HARQ-ACK information in a PUCCH transmission in response to detecting a DCI format 1_0 or DCI format 1_1, the UE determines a PUCCH resource with index $r_{\text{PUCCH}}$ , here, $0 \leq r_{\text{PUCCH}} \leq 15$ , and

$$r_{\text{PUCCH}} = \left\lfloor \frac{2 \cdot n_{\text{CCE},0}}{N_{\text{CCE}}} \right\rfloor + 2 \cdot \Delta_{\text{PRI}}$$ , where $N_{CCE}$ is a number of control channel elements (CCEs) in a Control-resource set (CORESET) of a PDCCH reception with the DCI format 1_0 or DCI format 1_1, as described in Subclause 10.1, in which $n_{\text{CCE},0}$ is the index of a first CCE for the PDCCH reception, and $\Delta_{\text{PRI}}$ is a value of the PUCCH resource indicator field in the DCI format 1_0 or DCI format 1_1.

If $\left\lfloor r_{\text{PUCCH}}/8 \right\rfloor = 0$ ("/" represents a division operation, and ⌊ ⌋ represents picking the floor value):

- the UE determines the PRB index of the PUCCH transmission in the first hop as $RB_{\text{BWP}}^{\text{offset}} + \left\lfloor r_{\text{PUCCH}}/N_{\text{CS}} \right\rfloor$ and the

PRB index of the PUCCH transmission in the second hop as $N_{\text{BWP}}^{\text{size}} - 1 - RB_{\text{BWP}}^{\text{offset}} - \left\lfloor r_{\text{PUCCH}}/N_{\text{CS}} \right\rfloor$, where $N_{\text{CS}}$ is

the total number of initial cyclic shift indexes in the set of initial cyclic shift indexes; and

- the UE determines the initial cyclic shift index in the set of initial cyclic shift indexes as $r_{\text{PUCCH}}$ mod $N_{\text{CS}}$. Here, "mod" represents a modulo operation.

If $\left\lfloor r_{\text{PUCCH}}/8 \right\rfloor = 1$ :

- the UE determines the PRB index of the PUCCH transmission in the first hop as

$N_{\text{BWP}}^{\text{size}} - 1 - RB_{\text{BWP}}^{\text{offset}} - \left\lfloor (r_{\text{PUCCH}} - 8)/N_{\text{CS}} \right\rfloor$ and the PRB index of the PUCCH transmission in the second

hop as $RB_{\text{BWP}}^{\text{offset}} + \left\lfloor (r_{\text{PUCCH}} - 8)/N_{\text{CS}} \right\rfloor$ ; and

- the UE determines the initial cyclic shift index in the set of initial cyclic shift indexes as $(r_{\text{PUCCH}} - 8)$ mod$N_{\text{CS}}$.

In 3GPP TS38.213 V15.6.0, section 9.2.3 states as below for the slot level offset from the PDSCH to the PUCCH resource set determined.

For the DCI format 1_0, the PDSCH-to-HARQ-timing-indicator field values map to {1, 2, 3, 4, 5, 6, 7, 8}. For the DCI format 1_1, if present, the PDSCH-to-HARQ-timing-indicator field values map to values for a set of number of slots provided by dl-DataToUL-ACK as defined in Table 9.2.3-1.

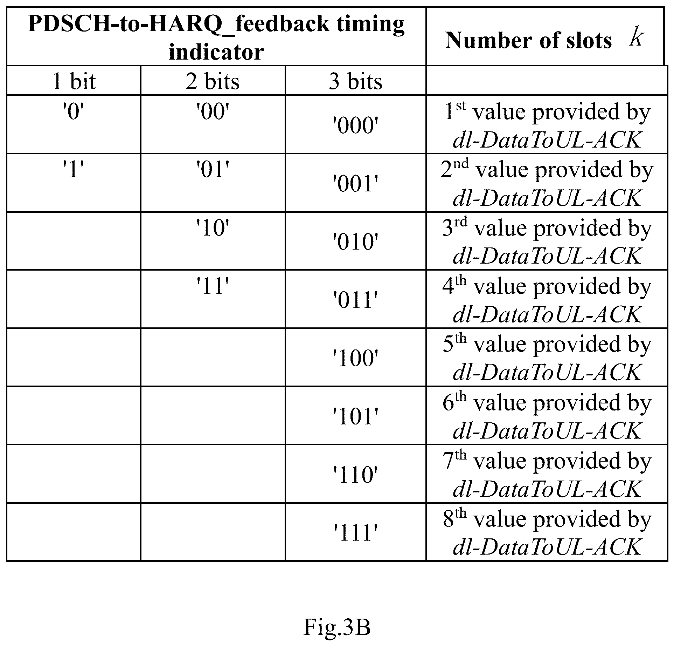

Fig. 3B is a diagram illustrating Table 9.2.3-1 in 3GPP TS38.213 V15.6.0, which is an exemplary mapping of PDSCH-to-HARQfeedback timing indicator field values to the numbers of slots according to some embodiments of the present disclosure.

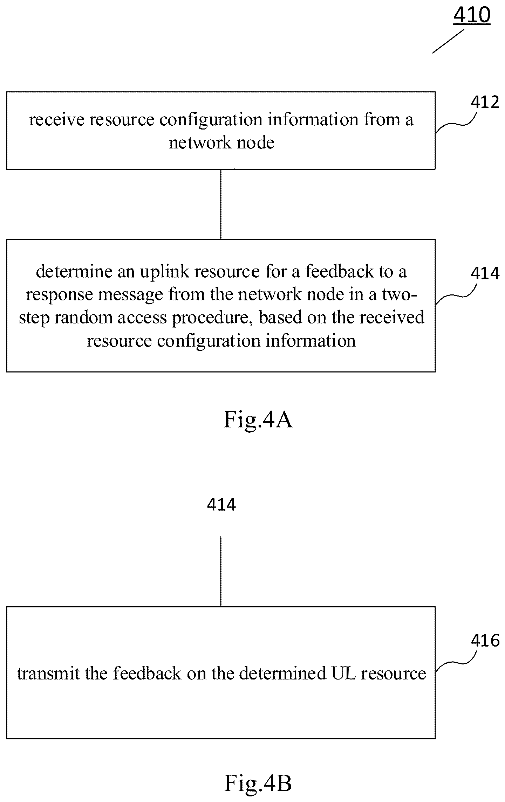

Fig. 4A shows a flowchart illustrating a method according to some embodiments of the present disclosure. The method 410 illustrated in Fig. 4A may be performed by a terminal device or an apparatus communicatively coupled to the terminal device. In accordance with an exemplary embodiment, the terminal device such as a UE may be configurable to connect to a network node such as a gNB, for example, by performing a RA procedure (e.g., a two-step RA procedure).

According to the exemplary method 410 illustrated in Fig. 4A, the terminal device may receive resource configuration information from a network node, as shown in block 412.

In accordance with some exemplary embodiments, the resource configuration information may comprise at least one of: at least one parameter of a broadcast message, at least one parameter of Physical Downlink Control Channel (PDCCH), at least one parameter of Physical Downlink Shared Channel (PDSCH), and at least one parameter of the response message.

At block 414, the terminal device may determine an UL resource for a feedback to a response message from the network node in a two-step random access procedure, based on the received resource configuration information. The UL resource for the feedback may be determined by the following example ways.

In response to MsgB for users in an IDLE/INACTIVE Mode, and when MsgB contains at least a success RAR, the options include:

Option 1: There is no HARQ-ACK response for MsgB when MsgB contains the success RAR.

Option 2: HARQ-ACK response is supported for MsgB when MsgB only contains the success RAR of one UE.

a) If MsgB contains the success RAR of more than one UE, there is no HARQ-ACK response for MsgB; and
b) Optionally, if MsgB contains the success RAR for one UE only and the fallback RAR(s) for other UE(s), HARQ-ACK response may be supported for MsgB.

Option 3: HARQ-ACK response is supported for MsgB when MsgB contains the success RAR of one or multiple UEs.

Option 4: HARQ-ACK response can include:

a) ACK only; or
b) ACK or negative acknowledgement (NACK).

As to the details of the HARQ feedback resource determination, below are some options to indicate a unique PUCCH resource for each UE with the success RAR in MsgB.

Option 1/1a: The PUCCH resource may be indicated by explicit PUCCH resource signaling in the DCI based on:

a) Option 1: a DCI start CCE; or
b) Option 1a: a reused 1 bit-"downlink assignment index (DAI)" indication.

As to the first UE, the PUCCH resource may be a PUCCH resource indicator (PRI) and a PDSCH-to-HARQ_feedback timing indicator in PDCCH scheduling MsgB.

As to the other UEs, the PUCCH resource may be a UE PRI and/or the PDSCH-to-HARQ_feedback timing indicator in PDCCH scheduling MsgB. There may be three alternative configurations:

i. Alt1: the PRI and the PDSCH-to-HARQ_feedback timing indicator are unique to each UE;
ii. Alt2: the PRI is unique to each UE and the PDSCH-to-HARQ_feedback timing indicator is common to all UEs; or
iii. Alt3: the PDSCH-to-HARQ_feedback timing indicator is unique to each UE and the PRI is common to all UEs.

Option 2/2a: The PUCCH resource may be indicated by explicit PUCCH resource signaling in the MsgB PDSCH based on:

a) Option 2: the DCI start CCE; or
b) Option 2a: the reused 1 bit-"DAI" indication.

As to the first UE, the PUCCH resource may be the PRI and the PDSCH-to-HARQ_feedback timing indicator in PDCCH scheduling MsgB.

As to the other UEs , the PUCCH resource may be the UE PRI and/or the PDSCH-to-HARQ_feedback timing indicator in PDSCH of MsgB.

There may be three alternative configurations:

    i. Alt1: the PRI and the PDSCH-to-HARQ_feedback timing indicator are unique to each UE;
    ii. Alt2: the PRI is unique to each UE and the PDSCH-to-HARQ_feedback timing indicator is common to all UEs; or
    iii. Alt3: the PDSCH-to-HARQ_feedback timing indicator is unique to each UE and the PRI is common to all UEs.

Option 3/3a: The PUCCH resource may be indicated by implicit PUCCH resource signaling based on:

    a) Option 3: the DCI start CCE; or
    b) Option 3a: the reused 1 bit-"DAI" indication.

    As to the first UE, the PUCCH resource may be the PRI and the PDSCH-to-HARQ_feedback timing indicator in PDCCH.
    As to the other UEs, the PUCCH resource may be implicit derivation based on position order of UE within MAC PDU.

The difference between option N and Na (N $\in$ {1,2,3}) is whether to use a 1-bit implicit indication based on the start CCE as in release 15 or use the 1-bit DAI indication. The other resource signaling parameters remain the same.
Option 4: The PUCCH resource may be indicated by implicit PUCCH resource signaling in the MsgB PDSCH based on the DCI start CCE.

    The PDSCH-to-HARQ_feedback timing indicator and the PRI are common to all UEs.

    A PUCCH resource index, $r_{PUCCH}$, is unique to each UE, and $r_{PUCCH}$ is calculated based on the PRI, an index of the first CCE (DCI start CCE) and the C-RNTI included in the success RAR. Multiple UEs' PUCCH resource indices are randomized by the C-RNTI.

In accordance with some exemplary embodiments, the feedback may comprise a HARQ feedback.
In accordance with some exemplary embodiments, the response may be a RAR.
In accordance with some exemplary embodiments, the UL resource may be a PUCCH resource.
The HARQ feedback and associated PUCCH resources pertain only to the success RAR/fallback RAR transmission and do not consider the separately transmitted second part (the higher layer part) of msgB. If the second part (the higher layer part) of msgB is transmitted, PUCCH configuration information of the PUCCH to be used for transmission of HARQ feedback on the second part (the higher layer part) of msgB could be included in the second part of msgB (the higher layer part), or the pucch-ResourceCommon configuration could be used, and the HARQ timing could be indicated in the DCI, which contains the PDSCH scheduling allocation for the second part (the higher layer part) of msgB.
In accordance with some exemplary embodiments, the response message may comprise two or more responses which are multiplexed as shown in Fig. 2A and 2D, the two or more responses may comprise at least one of the success response and the fallback response.
In accordance with some exemplary embodiments, in which the UL resource is the PUCCH resource, the resource configuration information may comprise at least one set (e.g., three sets) of Downlink Control Information (DCI) parameters, as shown in below:

- PUCCH resource indicator1;

- PDSCH-to-HARQ_feedback timing indicator1;

- PUCCH resource indicator2;

- PDSCH-to-HARQ_feedback timing indicator2;

- PUCCH resource indicator3; and

- PDSCH-to-HARQ_feedback timing indicator3.

In the above example, the first set of DCI parameters may include the PUCCH resource indicator1 and the PDSCH-to-HARQ_feedback timing indicator1, which is used for a first terminal device (referred to as "UE1"). The second set of DCI parameters may include the PUCCH resource indicator2 and the PDSCH-to-HARQ feedback timing indicator2, which is used for a second terminal device (referred to as "UE2"). The third set of DCI parameters may include the PUCCH resource indicator3 and the PDSCH-to-HARQ_feedback timing indicator3, which is used for a third terminal device (referred to as "UE3"). The respective UEs are able to obtain their corresponding DCI parameters. This approach is also applicable if there is only one set of DCI parameters.

In an example, the set of PUCCH configuration parameters in the DCI that a UE should use may be derived from one or more parameters, e.g. the preamble ID, the PUSCH RU, the contention resolution ID, or the terminal device ID. It should be noted that in these examples the amount of the sets of PUCCH configuration parameters in the DCI may be the same as that of two-step preamble IDs or PUSCH RUs available for the RO.

In accordance with some exemplary embodiments, each set of DCI parameters may be preceded by a bit indicating a presence of the set of DCI parameters. In order to save bits in the DCI, an unused set of PUCCH configuration parameters (i.e. the one to which none of the targeted UEs map) could be replaced by an indicator indicating "absent set of PUCCH configuration parameters". For instance, each set of PUCCH configuration parameters in the DCI could be preceded by a 1-bit flag indicating "PUCCH configuration parameter set being present" or "PUCCH configuration parameter set being absent".

In accordance with some exemplary embodiments, the resource configuration information may comprise two or more sets of DCI parameters, each of the sets of DCI parameters other than the first set (i.e., the set at the start position) of DCI parameters may be defined by an offset with respect to a previous set of DCI parameters for another terminal device. In this case, an offset indicator value for later UEs relative to each of the parameters for e.g., the UE1 in the DCI may be introduced. This encoding would potentially reduce the number of bits required in the DCI, as only the first set of PUCCH configuration parameters would have to contain full values, whereas the subsequent sets of PUCCH configuration parameters could instead consist of potentially more bit-economic offset values relative to the corresponding parameter value in the first set of PUCCH configuration bits. Alternatively, the offset values can be simply predetermined instead of being signaled.

One example format is as shown below:

• PUCCH resource indicator1;

• PDSCH-to-HARQ_feedback timing indicator1;

• PUCCH resource indicator offset1;

• PDSCH-to-HARQ_feedback timing offset1;

• PUCCH resource indicator offset2; and

• PDSCH-to-HARQ_feedback timing offset2.

In accordance with some exemplary embodiments, the two or more responses may be intended for two or more terminal devices respectively, the resource configuration information may indicate a set of cyclic shift indexes, and the set of cyclic shift indexes may be able to be used by the two or more terminal devices with the two or more responses multiplexed on one physical downlink shared channel.

In an example, the resource configuration information may be the pucch-ResourceCommon IE. As mentioned previously, the pucch-ResourceCommon IE may be used to indicate an index of Table 9.2.1-1. As shown in Fig. 3A, each index corresponds to a set of cyclic shift indexes. When two or more responses are multiplexed on one physical downlink shared channel, the set of cyclic shift indexes may be able to be used by two or more terminal devices.

A UE could use the order in which the UEs' respective information records appear in the success RAR/fallback RAR to determine which column of table 9.2.1-1 the UE should use. The UE uses the HARQ principle that only transmitting HARQ ACK after successful reception/decoding of the success RAR/fallback RAR and determined successful contention resolution, otherwise remaining silent (i.e., not transmit any HARQ feedback at all).

In this example, different cyclic shift (CS) index values in table 9.2.1-1 can be used by different UEs.

For example, when the first row (as shown below) is indicated, the two CS values 0 and 3 can be used for the two UEs multiplexed on the same msgB.

| Index | PUCCH format | First symbol | Number of symbols | PRB offset $RB_{BWP}^{offset}$ | Set of initial CS indexes |
|---|---|---|---|---|---|
| 0 | 0 | 12 | 2 | 0 | {0, 3} |

A variation of this embodiment could be to use PUCCH resource sets which are frequency-division-multiplexed (FDMed) or interlaced.

In accordance with some exemplary embodiments, the terminal device may extend the amount of cyclic shift indexes in the set of cyclic shift indexes if the amount of cyclic shift indexes is less than the amount of the terminal devices.

If the amount of cyclic shift indexes is less than the amount of the terminal devices, a modified/extended PUCCH resource table set may be used, which can indicate multiple PUCCH resources on the same row, so as to provide separate PUCCH configurations for multiple UEs.

In an example, N columns are introduced with time offset values in the table for additional N UEs. The time offset can be at a slot level and/or a symbol level. Here, N is a natural number.

If the amount of CS indexes is less than the amount of the terminal devices, one solution is to extend the set of initial CS indexes in Table 9.2.1-1. Considering the first row for the set of initial CS indexes in Table 9.2.1-1, there is {0,3}. For example, two UEs correspond to two groups, one associates to CS value 0, and the other one associates to CS value 3.

The extension could be based on Msg A properties. For example, group 0 may be extended to 0,2,4 and group 3 may be extended to 1,3,5, and these may be a one-to-one mapping between CS indexes and Msg A properties.

In accordance with some exemplary embodiments, in which the UL resource is the PUCCH resource and multiple terminal devices are transmitting feedbacks on multiple PUCCH resource, the feedbacks of the two or more terminal devices may be able to be identified by at least one of the following:

- Demodulation Reference Signals;

- an order of inclusion of the two or more terminal devices' respective information records in the response message;

- a preamble identifier, ID;

- a Physical Uplink Shared Channel, PUSCH, resource unit;

- a contention resolution ID; and

- a terminal device ID.

In accordance with some exemplary embodiments, the two or more responses may be intended for two or more terminal devices respectively, and the two or more terminal devices may transmit feedbacks on a same PUCCH resource.

In accordance with some exemplary embodiments, in which multiple terminal devices transmit feedbacks on the same PUCCH resource, the feedbacks of the two or more terminal devices may be able to be identified by at least one of the following:

- different Demodulation Reference Signals;

- the order of inclusion of the two or more terminal devices' respective information records in the response message;

- the preamble ID;

- the PUSCH resource unit;

- the contention resolution ID; and

- the terminal device ID.

For example, the PUCCH resource would be configured to contain multiple bits so that each UE targeted by the msgB's first part transmission, i.e. the success RAR/fallback RAR, gets its own PUCCH bit to report HARQ feedback information. Each of the targeted UEs would thus have one of the PUCCH bits dedicated to it for the transmission of the HARQ feedback. For example, when three UEs are targeted by the success RAR/fallback RAR, each of these UEs would use one PUCCH bit, thus requiring three bits in total in the PUCCH resource. These bits could be denoted X, Y and Z, where bit X is for the UE1, bit Y is for the UE2 and bit Z is for the UE3. Note that a "PUCCH bit" here means a bit that is carried by PUCCH channel.

Since multiple UEs may transmit in the same PUCCH resource, the UEs should transmit PUCCH differently such that the gNB can suppress their mutual interference. An approach to identify colliding HARQ feedback transmissions for a same msgB PDSCH is to use different sequence initializations for UEs' PUCCH DMRSs. In such cases, the UEs may select an initialization value that is a function of the UE identifier known to the UE, prior to the initiation of the random access procedure, as described above. The gNB can then hypothesize multiple DM-RS sequence initialization values when decoding each PUCCH in order to find the ones used by the UEs.

In one variant of this embodiment, a UE derives its PUCCH bit based on the order of inclusion of the multiple UEs' respective information records in the success RAR/fallback RAR. For instance, if the UE's information record is the $X^{th}$ information record in the success RAR/fallback RAR, the UE would use the $X^{th}$ PUCCH bit for the transmission of the HARQ ACK (but would remain silent unless it has successfully received/decoded the success RAR/fallback RAR and determined that the contention resolution was in its favor).

In an example, the number of configured PUCCH bits could be dynamic and set equal to the number of UEs targeted by the success RAR/fallback RAR. Alternatively, the number of configured PUCCH bits may be static and always be equal to the maximum number of UEs that may be targeted by the success RAR/fallback RAR.

If a combination of parameters is used to derive the PUCCH bit, then each possible combination should map to a unique PUCCH bit and hence the number of PUCCH bits should be equal to the number of possible combinations for the RO.

The amount of PUCCH bits may be determined based on whether NACK being supported.

In an example, the HARQ feedback principle may be that only a UE, which successfully receives the success RAR/fallback RAR and concludes from the contention resolution information that it is targeted by the success RAR/fallback RAR, transmits HARQ feedback (i.e. transmits HARQ ACK). In other cases, if the UE fails to receive the success RAR/fallback RAR or succeeds to receive it but the contention resolution indicates that it is intended for another UE, the UE remains silent, in order not to cause collisions on the PUCCH and in order not to trigger superfluous retransmissions (if the UE would send NACK while the intended receiver actually correctly received the success RAR/fallback RAR and transmits ACK using the same PUCCH bit) or incorrectly indicate to the gNB that no further retransmissions are needed (if the UE would send ACK after successful reception while the intended receiver actually failed to receive the success RAR/fallback RAR).

Alternatively, in another example, a UE failing to correctly receive and decode the PDSCH transmission may provide an explicit NACK indication as the HARQ feedback to the gNB. The above described problems motivating the other HARQ feedback principle are then addressed through other means, such as including a UE ID in the HARQ feedback or letting higher layers detect and compensate for collisions. Providing explicit NACK indications instead of relying only on absence of explicit ACK has the benefit of providing richer feedback information, which the gNB may take into account in its retransmissions.

In accordance with some exemplary embodiments, the response message may comprise one success response or fallback response, and the resource configuration information may comprise at least one of the following:

- at least one DCI parameter; and

- at least one parameter of the broadcast message.

For example, the resource configuration information may comprise at least one of the following options:

- (a) the PUCCH resource indicator, and the PDSCH-to-HARQ_feedback timing indicator;

- (b) the PDSCH-to-HARQ_feedback timing indicator, and the pucch-ResourceCommon configuration;

- (c) the pucch-ResourceCommon information element; and

- (d) the response window size, and the system frame number.

As to option (a), a msgB-RNTI addressed DCI may include one or more of the following parameters to indicate the PUCCH resource within a slot and the slot level resource respectively. Below are two example parameters:

- the PUCCH resource indicator; and

- the PDSCH-to-HARQ_feedback timing indicator.

As to option (b), the msgB-RNTI addressed DCI may include only one parameter below to determine the slot level resource, and use the pucch-ResourceCommon configuration to determine the resource within a slot. Below is one example parameter:

- the PDSCH-to-HARQ_feedback timing indicator.

In some embodiments, a UE failing to correctly receive and decode the PDSCH transmission provides an explicit NACK indication as the HARQ feedback to the gNB. The potential HARQ feedback collision problems would then be addressed through means, such as including a UE ID in the HARQ feedback or letting higher layers detect and compensate for collisions. Providing explicit NACK indications instead of relying only on absence of explicit ACK has the benefit of providing richer feedback information, which the gNB may take into account in its retransmissions.

When the UE does not decode the PDSCH carrying msgB, it can't determine the value of any timing advance carried in the msgB. Therefore, such UEs may not have an accurate timing advance value to transmit HARQ feedback. This implies that PUCCH or PUSCH carrying HARQ feedback for msgB could collide with other PUCCHs or PUSCHs. In such cases, allocating different time and frequency resources for msgB HARQ feedback that are sufficiently separated from other PUCCH or PUSCH resources may be used to mitigate collision.

Therefore, in an embodiment, a UE transmits a HARQ feedback in a physical channel in response to a PDSCH carrying a random access response, where the HARQ feedback can indicate either a positive acknowledgement (ACK), or a negative acknowledgement (NACK).

As to option (c), no DCI parameters are used. Common parameters are defined for all UEs for both the slot level and symbol level indication of the PUCCH resource. The common parameters can be realized as extensions to the pucch-ResourceCommon IE, e.g. in the form of a release 16+ specific extension, e.g. in an IE called pucch-ResourceCommon-r16.

As to option (d), in order to cope with extended RAR window for the monitored msgB and to allow both ACK and NACK, at least system frame number (SFN) for the system frame, in which UE transmitted the preamble, may be used to indicate orthogonal PUCCH resources. Depending on how large the RAR window is extended, the UE may select the PUCCH resource index autonomously.

As an example, this can be done either through:

$$\text{PUCCH resource indicator} = \textit{SFN mod RARwindowExtensionFactor}$$

or, PDSCH-to-HARQ_feedback timing indicator = **SFN mod RARwindowExtensionFactor,**

where **RARwindowExtensionFactor** is the factor by which the RAR window is extended to a msgB window.

In accordance with some exemplary embodiments, it is required that only one UE can be targeted in one success RAR/fallback RAR if the HARQ ACK is expected, otherwise no HARQ feedback is allowed. Whether a success RAR/fallback RAR targets a single UE or multiple UEs may be indicated in the DCI conveying the DL scheduling allocation for the success RAR/fallback RAR, or in header information in the success RAR/fallback RAR or the UE may discover it when parsing the information records included in the success RAR/fallback RAR (e.g., looking at an appendix bit, which indicate whether another information record (for another UE) will follow or not). Note that in order for the alternatives where the UE finds the information in the success RAR/fallback RAR to work, the UEs should use the HARQ feedback principle in which a UE only transmits HARQ ACK after successful reception/decoding of the succsesRAR/fallback RAR and determined successful contention resolution and otherwise remains silent (i.e., not transmit any HARQ feedback at all). Static configuration via the system information may also be used or it may even be determined by standard specifications.

In accordance with some exemplary embodiments, the UL resource may be the PUSCH resource.

In an example, the HARQ feedback on the success RAR/fallback RAR can be transmitted on the PUSCH resource instead of the PUCCH resource, where the PUSCH resource can be granted in the PDCCH DCI containing the scheduling allocation for the success RAR/fallback RAR or in the success RAR/fallback RAR itself (i.e., in the PDSCH transmission) with similar methods as provided above.

In case the scheduling information is carried in the success RAR/fallback RAR, a common header for the multiplexed success RARs/fallback RARs can be used. The scheduling information contains both resource and indication of which part (bit) within the PUSCH resource should be used for feedback to each individual success RAR/fallback RAR.

In this example, the HARQ feedback can be provided while allowing some (typically small) amount of instant data transmission with this PUSCH resource granted.

In an example, the PUSCH may be a retransmission of msgA PUSCH.

In an example, msgB may be scheduled by a PDCCH containing an RNTI identifying the PDSCH carrying msgB as containing a single success RAR/fallback RAR. The RNTI may for example be a Cell-RNTI or an RNTI using a UE ID that was carried in a corresponding msgA or a msgB RNTI. In this case, if a UL grant is given that corresponds to symbols where HARQ feedback should be transmitted, the UE will transmit HARQ feedback in PUSCH according to Rel-15 procedures that carry UCI on PUSCH. Because the UE receives the grant in PDCCH, it may transmit either the ACK or the NACK when it does or does not decode the PDSCH.

In cases where the PUSCH resource for HARQ is given in PDSCH, the UE may not transmit the NACK, since a successful decode of PDSCH is required to determine the PUSCH resource for the HARQ feedback, and therefore the UE can't determine resources that would carry the NACK from the PDSCH. Therefore, the UE transmits the ACK or does not transmit the HARQ feedback when the PUSCH resource for HARQ is given in PDSCH. In these cases where only ACK is transmitted, when msgB contains multiple success RARs/fallback RARs and each identifies the HARQ feedback resource to be used on PUSCH, all UEs addressed by the RARs will have successfully decoded the HARQ feedback resource allocation, and thus these UEs can indicate HARQ feedback on different PUSCH resources for their corresponding RAR when it is multiplexed into a single PDSCH.

Fig. 4B is a flowchart illustrating a further step of the method as shown in Fig. 4A according to some embodiments of the present disclosure. At block 416, the terminal device may transmit the feedback on the determined UL resource.

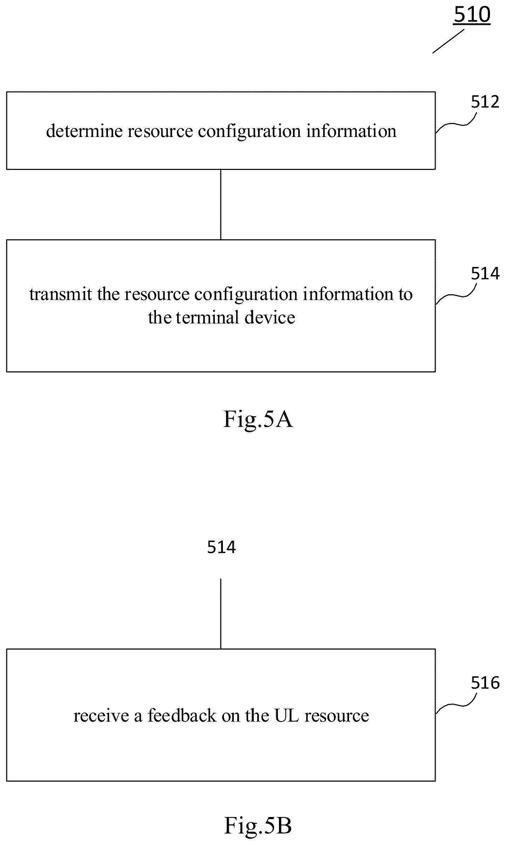

Fig. 5A is a flowchart illustrating a method 510 according to some embodiments of the present disclosure. The method 510 illustrated in Fig. 5A may be performed by a network node or an apparatus communicatively coupled to the network node. In accordance with an exemplary embodiment, the network node may comprise a base station such as a gNB. The network node may be configurable to communicate with one or more terminal devices such as UEs which can connect to the network node by performing a RA procedure (e.g., a two-step RA procedure).

According to the exemplary method 510 illustrated in Fig. 5A, the network node may determine resource configuration information at block 512. The resource configuration information may indicate an UL resource for a feedback of a terminal device to a response message in a two-step random access procedure. At block 514, the network node may transmit the resource configuration information to the terminal device.

Fig. 5B shows a flowchart illustrating a further step of the method as shown in Fig. 5A according to some embodiments of the present disclosure.

At block 516, the network node may receive a feedback on the UL resource which is determined by the terminal device.

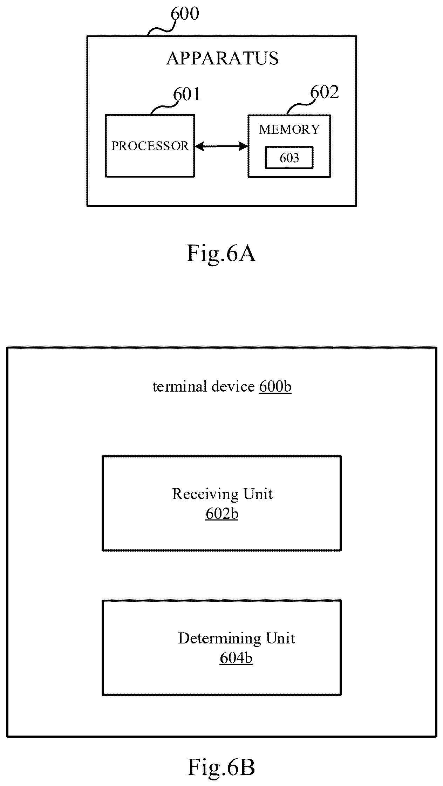

Fig. 6A is a block diagram illustrating an apparatus 600 according to various embodiments of the present disclosure. As shown in Fig. 6A, the apparatus 600 may comprise one or more processors such as processor 601 and one or more memories such as memory 602 storing computer program codes 603. The memory 602 may be non-transitory machine/processor/computer readable storage medium. In accordance with some exemplary embodiments, the apparatus 600 may be implemented as an integrated circuit chip or module that can be plugged or installed into a terminal device as described with respect to Fig. 4A or Fig. 5A, or a network node as described with respect to Fig. 4B or Fig. 5B. In such case, the apparatus 600 may be implemented as a terminal device as described with respect to Fig. 4A or Fig. 5A, or a network node as described with respect to Fig. 4B or Fig. 5B.

In some implementations, the one or more memories 602 and the computer program codes 603 may be configured to, with the one or more processors 601, cause the apparatus 600 at least to perform any operation of the method as described in connection with Fig. 4A or Fig. 5A. In other implementations, the one or more memories 602 and the computer program codes 603 may be configured to, with the one or more processors 601, cause the apparatus 600 at least to perform any operation of the method as described in connection with Fig. 4B or Fig. 5B. Alternatively or additionally, the one or more memories 602 and the computer program codes 603 may be configured to, with the one or more processors 601, cause the apparatus 600 at least to perform more or less operations to implement the proposed methods according to the exemplary embodiments of the present disclosure.

Various embodiments of the present disclosure provide an apparatus for random access. In an exemplary embodiment, the apparatus may be implemented in a terminal device such as a UE. FIG. 6B is a block diagram showing a terminal device according to an embodiment of the disclosure. As shown, the terminal device 600b comprises a receiving unit 602b and a determining unit 604b. The receiving unit 602b may be operable to carry out the operation in block 412, and the determining unit 604b may be operable to carry out the operation in block 414. Optionally, the determining unit 604b and/or the receiving unit 602b may be operable to carry out more or less operations to implement the proposed methods according to the exemplary embodiments of the present disclosure.

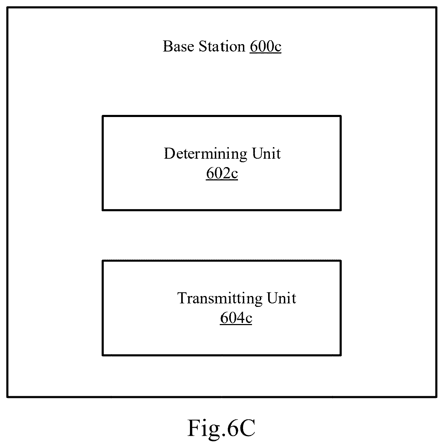

Various embodiments of the present disclosure provide an apparatus for random access. In an exemplary embodiment, the apparatus may be implemented in a network node such as a base station. FIG. 6C is a block diagram showing a base station according to an embodiment of the disclosure. As shown, the base station 600c comprises a determining unit 602c and a transmitting unit 604c. The determining unit 602c may be operable to carry out the operation in block 512, and the transmitting unit 604c may be operable to carry out the operation in block 514. Optionally, the receiving unit 602c and/or the transmitting unit 604c may be operable to carry out more or less operations to implement the proposed methods according to the exemplary embodiments of the present disclosure.

Hereinafter may be some further details of the embodiments of the present disclosure.

4 step RA procedure in NR

A 4-step approach is used for the random-access procedure, see Figure 1A. In this approach, the UE detects a synchronization signal (SS) and decodes the broadcasted system information, followed by transmitting a PRACH preamble (message 1) in the uplink. The gNB replies with a RAR (Random Access Response, message 2). The UE then transmits a UE identification (message 3) on PUSCH.

The UE transmits PUSCH (message 3) after receiving a timing advance command in the RAR, allowing PUSCH to be received with a timing accuracy within the cyclic prefix. Without this timing advance, a very large CP would be needed in order to be able to demodulate and detect PUSCH, unless the system is applied in a cell with very small distance between UE and eNB. Since NR will also support larger cells with a need for providing a timing advance to the UE the 4-step approach is needed for random access procedure.

2-step RACH work item for Release 16 in 3GPP

A 2-step RACH work item has been approved in RAN1 #82 plenary meeting [1].

Completing the initial access in only two steps as illustrated in Figure 1B:

- Step 1: The UE sends a message A including random access preamble together with higher layer data such as RRC connection request possibly with some small payload on PUSCH;

- Step 2: The gNB sends RAR (actually called message B) including UE identifier assignment, timing advance information, and contention resolution message etc. In addition, message B (msgB) may contain a higher layer part, e.g. an RRC message, which probably will be transmitted in a separate transmission from the RAR (see below).

The definition of msgB has been very vague and it may be subject to further changes in RAN2. The current last word on this topic from RAN2 is that msgB is a response to msgA, which may contain contention resolution message(s), fallback indication(s) to schedule MSG3 transmission, and backoff indication. Any higher layer information, e.g. corresponding to the content of msg4 in 4-step RA, would thus be transmitted in separate message(s). However, since this msgB "definition" cannot safely be regarded as stable, we have chosen to use another definition in the present document, which is well adapted to the description of the present invention. Mapping to the above described RAN2 msgB definition and any changes thereof, should however be straightforward.

To this end, we have chosen the following msgB terminology, i.e. there are up to two distinct parts of a msgB:

1) a MAC layer part which indicates success of the msgA reception ("successRAR", including contention resolution ID and timing advance information) or indicates fallback to 4-step RA ("fallbackRAR");

2) a higher layer part, typically consisting of an RRC message. The second part of msgB is only transmitted in case the first part is a successRAR and even then, it may be omitted if the UE is in RRC_CONNECTED state.

There are currently different options on the table in 3GPP for how to transmit these two parts of msgB:

A: Multiple successRARs/fallbackRARs (i.e. multiple part 1's) are multiplexed in one first MAC PDU. If the second part (the higher layer part) is transmitted, one of them may be included in this first MAC PDU, but the remaining ones are transmitted in subsequent MAC PDU(s) with a single part 2 in each MAC PDU (i.e. no multiplexing of part 2's in the same MAC PDU). An example is shown in Figure 2A. In this case the RNTI for the multiplexed SuccessRARs/fallbackRARs is common for all UEs. An example of this would be the Rel 15 RA-RNTI for 4-step when the UEs transmits the preambles on the PRACH occasions corresponding to same RA-RNTI value.

B: Only a single successRAR/fallbackRAR is transmitted in a first MAC PDU. If the second part (the higher layer part) is transmitted, it is transmitted separately in a subsequently transmitted MAC PDU of its own. This is illustrated in Figure 2B.

C: The two msgB parts are transmitted together in a single MAC PDU for a single UE. This is illustrated in Figure 2C. In this case, it is preferable that the MAC PDUs for different UEs are addressed to different RNTIs to enable per UE multiplexing.

D: Multiple successRARs/fallbackRARs (i.e. multiple part 1's) in msgB only contains a first part for contention resolution sucessRAR and/or fallbackRAR; for where a second part, e.g. SRB RRC message is for the successful case only scheduled in subsequent slots. The difference between this option and option A is that in option A, the part 2 (e.g. RRC message) of one of the targeted UEs may be included in the first MAC PDU, while this is not allowed/possible in this option (i.e. in option D).

<u>HARQ feedback in NR release 15</u>

<u>uplink resource determination</u>

In NR release 15, in 3GPP TS 38.213 section 8.4, the HARQ feedback to the PDSCH carrying msg4 is described as below:

In response to a PUSCH transmission scheduled by a RAR UL grant when a UE has not been provided a C-RNTI, the UE attempts to detect a DCI format 1_0 with CRC scrambled by a corresponding TC-RNTI scheduling a PDSCH that includes a UE contention resolution identity [11, TS 38.321]. In response to the PDSCH reception with the UE contention resolution identity, the UE transmits HARQ-ACK information in a PUCCH. The PUCCH transmission is within a same active UL BWP as the PUSCH transmission. A minimum time between the last symbol of the PDSCH reception and the first symbol of the corresponding PUCCH transmission with the HARQ-ACK information is equal to $N_{T,1}$ + 0.5 msec. $N_{T,1}$ is a time duration of $N_1$ symbols corresponding to a PDSCH reception time for UE processing capability 1 when additional PDSCH DM-RS is configured. For $\mu = 0$, the UE assumes $N_{1,0}$ = 14 [6, TS 38.214].

In 3GPP TS38.213 V15.6.0, section 9.2.1 states as below for the PUCCH resource set determination when no dedicated PUCCH resource is available:

If a UE does not have dedicated PUCCH resource configuration, provided by *PUCCH-ResourceSet* in *PUCCH-Config,* a PUCCH resource set is provided by *pucch-ResourceCommon* through an index to a row of Table 9.2.1-1 for transmission of HARQ-ACK information on PUCCH in an initial UL BWP of $N_{\mathrm{BWP}}^{\mathrm{size}}$ PRBs. The PUCCH resource set includes sixteen resources, each corresponding to a PUCCH format, a first symbol, a duration, a PRB offset $RB_{\mathrm{BWP}}^{\mathrm{offset}}$, and a cyclic shift index set for a PUCCH transmission. The UE transmits a PUCCH using frequency hopping. An orthogonal cover code with index 0 is used for a PUCCH resource with PUCCH format 1 in Table 9.2.1-1. The UE transmits the PUCCH using the same spatial domain transmission filter as for a PUSCH transmission scheduled by a RAR UL grant as described in Subclause 8.3.

If a UE is not provided *pdsch-HARQ-ACK-Codebook,* the UE generates at most one HARQ-ACK information bit.

If the UE provides HARQ-ACK information in a PUCCH transmission in response to detecting a DCI format 1_0 or DCI format 1_1, the UE determines a PUCCH resource with index $r_{PUCCH}$, $0 \leq r_{\mathrm{PUCCH}} \leq 15$, as

$$r_{\mathrm{PUCCH}} = \left\lfloor \frac{2 \cdot n_{\mathrm{CCE,0}}}{N_{\mathrm{CCE}}} \right\rfloor + 2 \cdot \Delta_{\mathrm{PRI}}$$ , where $N_{CCE}$ is a number of CCEs in a CORESET of a PDCCH reception with DCI format 1_0 or DCI format 1_1, as described in Subclause 10.1, $n_{\mathrm{CCE,0}}$ is the index of a first CCE for the PDCCH reception, and $\Delta_{\mathrm{PRI}}$ is a value of the PUCCH resource indicator field in the DCI format 1_0 or DCI format 1_1.

If $\left\lfloor r_{\mathrm{PUCCH}}/8 \right\rfloor = 0$

- the UE determines the PRB index of the PUCCH transmission in the first hop as $RB_{\mathrm{BWP}}^{\mathrm{offset}} + \left\lfloor r_{\mathrm{PUCCH}}/N_{\mathrm{CS}} \right\rfloor$ and the

PRB index of the PUCCH transmission in the second hop as $N_{\mathrm{BWP}}^{\mathrm{size}} - 1 - RB_{\mathrm{BWP}}^{\mathrm{offset}} - \left\lfloor r_{\mathrm{PUCCH}}/N_{\mathrm{CS}} \right\rfloor$, where $N_{\mathrm{CS}}$ is the total number of initial cyclic shift indexes in the set of initial cyclic shift indexes

- the UE determines the initial cyclic shift index in the set of initial cyclic shift indexes as $r_{\mathrm{PUCCH}}$ mod$N_{\mathrm{CS}}$

If $\left\lfloor r_{\mathrm{PUCCH}}/8 \right\rfloor = 1$

- the UE determines the PRB index of the PUCCH transmission in the first hop as

$$N_{\mathrm{BWP}}^{\mathrm{size}} - 1 - RB_{\mathrm{BWP}}^{\mathrm{offset}} - \left\lfloor \left( r_{\mathrm{PUCCH}} - 8 \right) / N_{\mathrm{CS}} \right\rfloor \quad \text{and the PRB index of the PUCCH transmission in the second}$$

hop as $RB_{\mathrm{BWP}}^{\mathrm{offset}} + \left\lfloor \left( r_{\mathrm{PUCCH}} - 8 \right) / N_{\mathrm{CS}} \right\rfloor$

- the UE determines the initial cyclic shift index in the set of initial cyclic shift indexes as ($r_{\mathrm{PUCCH}}$ - 8) mod$N_{\mathrm{CS}}$

pucch-ResourceCommon is defined as below in 38.331 V15.6.0: PUCCH-ConfigCommon
The IE PUCCH-ConfigCommon is used to configure the cell specific PUCCH parameters.

## PUCCH-ConfigCommon information element

```
-- ASN1START
-- TAG-PUCCH-CONFIGCOMMON-START

PUCCH-ConfigCommon ::=            SEQUENCE {
    pucch-ResourceCommon             INTEGER (0..15)                          OPTIONAL,
-- Cond InitialBWP-Only
    pucch-GroupHopping               ENUMERATED { neither, enable, disable },
    hoppingId                      INTEGER (0..1023)                        OPTIONAL,  -
- Need R
    p0-nominal                       INTEGER (-202..24)                       OPTIONAL,
-- Need R
    ...
}

-- TAG-PUCCH-CONFIGCOMMON-STOP
-- ASN1STOP
```

| **PUCCH-ConfigCommon** field descriptions |
|---|
| **hoppingId**<br>Cell-specific scrambling ID for group hopping and sequence hopping if enabled, see TS 38.211 [16], clause 6.3.2.2. |
| **p0-nominal**<br>Power control parameter PO for PUCCH transmissions. Value in dBm. Only even values (step size 2) allowed (see TS 38.213 [13], clause 7.2). |
| **pucch-GroupHopping**<br>Configuration of group- and sequence hopping for all the PUCCH formats 0, 1, 3 and 4. Value *neither* implies neither group or sequence hopping is enabled. Value *enable* enables group hopping and disables sequence hopping. Value *disable* disables group hopping and enables sequence hopping (see TS 38.211 [16], clause 6.3.2.2). |
| **pucch-ResourceCommon**<br>An entry into a 16-row table where each row configures a set of cell-specific PUCCH resources/parameters. The UE uses those PUCCH resources until it is provided with a dedicated *PUCCH-Config* (e.g. during initial access) on the initial uplink BWP. Once the network provides a dedicated *PUCCH-Config* for that bandwidth part the UE applies that one instead of the one provided in this field (see TS 38.213 [13], clause 9.2). |

| Conditional Presence | Explanation |
|---|---|
| *InitialBWP-Only* | The field is mandatory present in the *PUCCH-ConfigCommon* of the initial BWP (BWP#0) in SIB1. It is absent in other BWPs. |

------------------------------------------------ In 3GPP TS38.213 V15.6.0, section 9.2.3 states as below for the slot level offset from the PDSCH to the PUCCH resource set determined:
For DCI format 1_0, the PDSCH-to-HARQ-timing-indicator field values map to {1, 2, 3, 4, 5, 6, 7, 8}. For DCI format 1_1, if present, the PDSCH-to-HARQ-timing-indicator field values map to values for a set of number of slots provided by dl-DataToUL-ACK as defined in Table 9.2.3-1.

HARQ feedback of msgB

In RAN1#98, various options related to HARQ-ACK feedback of MsgB were discussed

Further study HARQ-ACK options in response to MsgB for users in IDLE/INACTIVE Mode, and when MsgB contains at least a SuccessRAR including:

- Option 1: No HARQ-ACK response for MsgB when containing SuccessRAR.
- Option 2: HARQ-ACK response is supported for MsgB when MsgB only contains the successRAR of one UE

  ∘ If MsgB contains the successRAR of more than one UE there is no HARQ-ACK response for MsgB
  ∘ FFS: If MsgB contains a successRAR for one UE only and fallback for other UEs.

- Option 3: HARQ-ACK response is supported for MsgB when MsgB contains the successRAR of one or multiple UEs
- FFS: HARQ-ACK response can include:

  ∘ Alt 1: ACK only
  ∘ Alt2: ACK or NACK.

Later in RAN1 reflector, mail discussions are on-going about the msgB HARQ feedback, details of the HARQ feedback resource determination, whether msgB retransmission with/without soft combining need to be further studied. See following options listed:

How to indicate a unique PUCCH resource for each UE with a successRAR in MsgB?

- Option 1/1a: Explicit PUCCH resource signaling in the DCI based on:

  ∘ Option 1: DCI start CCE
  ∘ Option 1a:Reuse 1bit-"DAI" indication
  ∘ First UE: PRI and PDSCH-to-HARQ_feedback timing indicator in PDCCH scheduling MsgB
  ∘ Other UEs: UE PRI and/or PDSCH-to-HARQ_feedback timing indicator in PDCCH scheduling MsgB

    ▪ Alt1: PRI and PDSCH-to-HARQ_feedback timing indicator are unique to each UE
    ▪ Alt2: PRI is unique to each UE and PDSCH-to-HARQ_feedback timing indicator is common to all UEs.
    ▪ Alt3: PDSCH-to-HARQ_feedback timing indicator is unique to each UE and PRI is common to all UEs.

- Option 2/2a: Explicit PUCCH resource signaling in the MsgB PDSCH based on:

  ∘ Option 2: DCI start CCE
  ∘ Option 2a:Reuse 1bit-"DAI" indication
  ∘ First UE: PRI and PDSCH-to-HARQ_feedback timing indicator in PDCCH scheduling MsgB
  ∘ Other UEs: UE PRI and/or PDSCH-to-HARQ_feedback timing indicator in PDSCH of MsgB

    ▪ Alt1: PRI and PDSCH-to-HARQ_feedback timing indicator are unique to each UE
    ▪ Alt2: PRI is unique to each UE and PDSCH-to-HARQ_feedback timing indicator is common to all UEs.
    ▪ Alt3: PDSCH-to-HARQ_feedback timing indicator is unique to each UE and PRI is common to all UEs.

- Option 3/3a: Implicit PUCCH resource signaling based on:

  ∘ Option 3: DCI start CCE
  ∘ Option 3a:Reuse 1bit-"DAI" indication
  ∘ First UE: PRI and PDSCH-to-HARQ_feedback timing indicator in PDCCH
  ∘ Other UEs implicit derivation based on position order of UE within MAC PDU.

The difference between option N and Na (N ∈ {1,2,3}) is whether to use 1-bit implicit indication based on the start CCE as in release 15 or use 1-bit DAI indication. The other resource signaling parameters remain the same,

- Option 4: Implicit PUCCH resource signaling in the MsgB PDSCH based on:

  ∘ DCI start CCE

◦ PDSCH-to-HARQ_feedback timing indicator and PRI are common to all UEs
◦ PUCCH resource index, $r_{PUCCH}$, is unique to each UE, $r_{PUCCH}$ is calculated based on the PRI, index of a first CCE(DCI start CCE) and the C-RNTI included in the successRAR. Multiple UEs' PUCCH resource indices are randomized by C-RNTI.

Below contains two parts, one of which contains embodiments addressing the case where the successRAR/-fallbackRAR targets a single UE, while the other part contains embodiments addressing the case where the success-RAR/fallbackRAR may target multiple UEs.

For all or a set of embodiments, one relevant (but not the only possible) HARQ feedback principle is that only a UE which successfully receives the successRAR/fallback/RAR (and higher layer msgB part in case of msg transmission option C in section 2.1.2) transmits any HARQ feedback on the PUCCH resource and this feedback will be ACK (positive acknowledgement). If the UE fails to receive the transmission, or successfully receives it, but the contention resolution information indicates that it is intended for another UE, the UE remains silent (i.e. it does not transmit any NACK). Hence, a UE which transmits HARQ feedback on the PUCCH resource will have received the timing advance (TA) information included in the successRAR/fallbackRAR and is therefore able to transmit the HARQ ACK with correct timing advance, meaning that the gNB does not have to provide the scheduling margins it does for msgA transmissions. With this HARQ feedback principle, the gNB interprets lack of HARQ feedback on the PUCCH as NACK (negative acknowledgement) and consequently retransmits the successRAR/fallbackRAR (unless a maximum allowed number of retransmissions has been reached).

**Embodiment 1: msgB (successRAR/fallbackRAR) transmission for single UE**

The embodiments described in this subsection are applicable to msgB transmission options B and C described in section 2.1.2. In case of option B, the HARQ feedback and associated PUCCH transmission resource pertain only to the successRAR/fallbackRAR part/message.

Because a single UE is addressed, only msgB HARQ feedback resources for one UE are needed. Identifying such resources requires a relatively small number of bits, and is already done in Rel-15 for PDSCHs not carrying random access responses. Therefore, in some embodiments, the HARQ feedback resources used to carry HARQ feedback in response to a PDSCH carrying at least a random access response are included in DCI using existing DCI fields such as one or more of the PUCCH resource indicator and PDSCH-to-HARQ_feedback. Two such embodiments (1a and 1b) follow.

**Embodiment 1a.** For msgB-RNTI addressed DCI, include one or more of the following parameters to indicate the PUCCH resource within a slot and the slot level resource respectively

- PUCCH resource indicator

- PDSCH-to-HARQ_feedback timing indicator

**Embodiment 1b.** For msgB-RNTI addressed DCI, include only one parameter below to determine the slot level resource, and use the *pucch-ResourceCommon* configuration to determine the resource within a slot.

- PDSCH-to-HARQ_feedback timing indicator

In some embodiments, a UE failing to correctly receive and decode the PDSCH transmission provides an explicit NACK indication as HARQ feedback to the gNB. The potential HARQ feedback collision problems would then be addressed through means, such as including a UE ID in the HARQ feedback or letting higher layers detect and compensate for collisions. Providing explicit NACK indications instead of relying only on absence of explicit ACK, has the benefit of providing richer feedback information, which the gNB may take into account in its retransmissions.

When the UE does not decode the PDSCH carrying msgB, it can't determine the value of any timing advance carried in the msgB. Therefore, such UEs may not have an accurate timing advance value to transmit HARQ feedback with. This implies that PUCCH or PUSCH carrying HARQ feedback for msgB could collide with other PUCCHs or PUSCHs. In such cases, allocating different time and frequency resources for msgB HARQ feedback that are sufficiently separated from other PUCCH or PUSCH resources may be used to mitigate collision.

Therefore, in an embodiment, a UE transmits a HARQ feedback in a physical channel in response to a PDSCH carrying a random access response, where the HARQ feedback can indicate either a positive acknowledgement, ACK, or a negative acknowledgement, NACK.

<u>Embodiment 1c</u>. No DCI parameters are used, define common parameters for all UEs for both the slot level and symbol level indication of the PUCCH resource. The common parameters can be realized as extensions to the *pucch-ResourceCommon* IE, e.g. in the form of a release 16+ specific extension, e.g. in an IE called *pucch-ResourceCommon-*

*r16.*

<u>Embodiment 1d</u>. To cope with extended RAR window for the msgB monitoring and to allow both ACK and NACKs, at least SFN for the system frame in which UE transmitted the preamble may be used to indicate orthogonal PUCCH resources. Depending on how much the RAR window is extended, the UE may select the PUCCH resource index autonomously.

As an example, this can be done either through:

-

$$PUCCH\ resource\ indicator = mod(SFN, RARwindowExtensionFactor)$$

or,

-

PDSCH-to-HARQ_feedback timing indicator = **mod(SFN, RARwindowExtensionFactor)**

where **RARwindowExtensionFactor** is the factor by which the RAR window is extended to a msgB window.

**Embodiment 2: msgB (successRAR/fallbackRAR) transmission with Multiple UEs multiplexed**

The embodiments described herein address msgB transmission option A and msgB transmission option D in section 2.1.2. The HARQ feedback and associated PUCCH resources pertain only to the successRAR/fallbackRAR transmission and do not consider the separately transmitted second part (the higher layer part) of msgB. If the second part (the higher layer part) of msgB is transmitted, PUCCH configuration information of the PUCCH to be used for transmission of HARQ feedback on the second part (the higher layer part) of msgB could be included in the second part of msgB (the higher layer part), or the *pucch-ResourceCommon* configuration could be used, and the HARQ timing could be indicated in the DCI containing the PDSCH scheduling allocation for the second part (the higher layer part) of msgB.

At least one of the following embodiments can be used:

<u>Embodiment 2a.</u> Multiple ACK and/or NACK bits are delivered on the same PUCCH resource.

With this embodiment, the PUCCH resource would be configured to contain multiple bits so that each UE targeted by the msgB part 1 transmission, i.e. the successRAR/fallbackRAR, gets its own PUCCH bit to report HARQ feedback information with. Each of the targeted UEs would thus have one of the PUCCH bits dedicated to it for transmission of the HARQ feedback. For example, with three UEs targeted by the successRAR/fallbackRAR, these UEs would use one PUCCH bit each, thus requiring three bits in total in the PUCCH resource. These bits could be denoted X, Y and Z, where bit X is for the 1st UE to use, bit Y is for the 2nd UE and bit Z is for the 3rd UE. Note that a "PUCCH bit" in this IvD means a bit that is carried by PUCCH channel.

Since multiple UEs may transmit in the same PUCCH resource, the UEs should transmit PUCCH differently such that the gNB can suppress their mutual interference. As described in section 5.1, an approach to identifying colliding HARQ feedback transmissions for a same msgB PDSCH is to use different sequence initializations for UEs' PUCCH DMRSs. In such cases, the UEs may select an initialization value that is a function of the UE identifier known to the UE prior to the initiation of the random access procedure, described above. The gNB can then hypothesize multiple DMRS sequence initialization values when decoding each PUCCH in order to find the ones used by the UEs.

In one **variant of this embodiment,** a UE derives its PUCCH bit based on <u>the order</u> of inclusion of the multiple UEs' respective information records in the successRAR/fallbackRAR. For instance, if the UE's information record is the Xth information record in the successRAR/fallbackRAR, the UE would use the Xth PUCCH bit for transmission of HARQ ACK (but would remain silent unless it has successfully received/decoded the successRAR/fallbackRAR and determined that the contention resolution was in its favor).

**With this embodiment variant,** the <u>number of configured PUCCH bits</u> could be dynamic and set equal to the number of UEs targeted by the successRAR/fallbackRAR. Alternatively, the number of configured PUCCH bits may be static and always be equal to the maximum number of UEs that may be targeted by a successRAR/fallbackRAR.

**In some embodiments,** <u>which bit position is used by which UE</u> can be derived from one or more of the following parameters:

Preamble ID. To ensure that the mapping from preamble ID to PUCCH bit is unique, so that two UEs choosing different preamble IDs cannot derive the same PUCCH bit to use, the number of PUCCH bits should be equal to the number of preamble IDs available for 2-step RA in the concerned RACH/PRACH occasion (RO).

PUSCH resource unit, including PUSCH time frequency resource, and/or PUSCH DMRS port, and/or PUSCH DMRS sequence. To ensure that the mapping from PUSCH RU to PUCCH bit is unique, so that two UEs choosing different PUSCH RUs cannot derive the same PUCCH bit to use, the number of PUCCH bits should be equal to the number of PUSCH RUs associated with the concerned RACH/PRACH occasion (RO).

If a combination of parameters is used to derive the PUCCH bit, then each possible combination should map to a unique PUCCH bit and hence the number of PUCCH bits should be equal to the number of possible combinations for the RO.

Alternatively, in some embodiments, a UE failing to correctly receive and decode the PDSCH transmission provides an explicit NACK indication as HARQ feedback to the gNB. The above described problems motivating the other HARQ feedback principle are then addressed through other means, such as including a UE ID in the HARQ feedback or letting higher layers detect and compensate for collisions. Providing explicit NACK indications instead of relying only on absence of explicit ACK, has the benefit of providing richer feedback information, which the gNB may take into account in its retransmissions.

In other **embodiments** below, multiple PUCCH resources are allocated to the UEs

**Embodiment 2b.** Based on the mail discussions, a set of PUCCH configuration parameters can be signaled for each UE in the DCI scheduling the successRAR/fallbackRAR, e.g.

- PUCCH resource indicator1

- PDSCH-to-HARQ_feedback timing indicator1

- PUCCH resource indicator2

- PDSCH-to-HARQ_feedback timing indicator2

- PUCCH resource indicator3

- PDSCH-to-HARQ_feedback timing indicator3

**In one embodiment,** the set of PUCCH configuration parameters in the DCI that a UE should use may be derived from one or more parameters, e.g. the **preamble ID or the PUSCH RU.** Note that with these examples there would have to be equally many sets of PUCCH configuration parameters in the DCI as there are 2-step preamble IDs or PUSCH RUs available for the RO. **Optionally,** to save bits in the DCI, an unused set of PUCCH configuration parameters (i.e. one which none of the targeted UEs map to), could be replaced by an indicator indicating "absent set of PUCCH configuration parameters". For instance, each set of PUCCH configuration parameters in the DCI could be preceded by a one-bit flag indicating "PUCCH configuration parameter set present" or "PUCCH configuration parameter set absent".

**In another embodiment** where the HARQ principle to only transmit HARQ ACK after successful reception/decoding of the successRAR/fallbackRAR and determined successful contention resolution and otherwise remain silent (i.e. not transmit any HARQ feedback at all) - a UE derives its set of PUCCH configuration parameters in the DCI based on the order of inclusion of the multiple UEs' respective information records in the successRAR/fallbackRAR. For instance, if the UE's information record is the $X^{th}$ information record in the successRAR/fallbackRAR, the UE would use the $X^{th}$ set of PUCCH configuration parameters in the DCI for transmission of HARQ ACK (but would remain silent unless it has successfully received/decoded the successRAR/fallbackRAR and determined that the contention resolution was in its favor).

**Another variant of this embodiment** could be to introduce an offset indicator value for later UEs relative to each of the parameters for the e.g. $1^{st}$ UE in the DCI. This encoding would potentially reduce the number of bits required in the DCI, as only the first set of PUCCH configuration parameters would have to contain full values, whereas the subsequent sets of PUCCH configuration parameters could instead consist of potentially more bit-economic offset values relative to the corresponding parameter value in the first set of PUCCH configuration bits. And another option is that the offset values can be simply predetermined instead of being signaled.

For example:

- PUCCH resource indicator1

- PDSCH-to-HARQ_feedback timing indicator1

- PUCCH resource indicator offset

- PDSCH-to-HARQ_feedback timing offset

- ...

**Embodiment 2c**. Use a modified/extended PUCCH resource table set, which can indicate multiple PUCCH resources on the same row, to provide separate PUCCH configurations for multiple UEs

E.g. introduce N columns with time offset values in the table for additional N UEs, the time offset can be slot level and/or symbol level.

Similar to what has previously been described, a UE could use the order in which the UEs' respective information records appear in the successRAR/fallbackRAR to determine which column the UE should use. As previously, this requires that the UE uses the HARQ principle to only transmit HARQ ACK after successful reception/decoding of the succsesRAR/fallbackRAR and determined successful contention resolution and otherwise remain silent (i.e. not transmit any HARQ feedback at all).

**A variation of this embodiment** could be to use PUCCH resource sets FDMed or interlaced.

**Another variation of this embodiment** could be that different cyclic shift (CS) index values in table 9.2.1-1 can be used by different UEs.

E.g. when the 1st row is indicated, the 2 CS values 0 and 3 can be used for the 2 UEs multiplexed on the same msgB

| Index | PUCCH format | First symbol | Number of symbols | PRB offset $RB_{\mathrm{BWP}}^{\mathrm{offset}}$ | Set of initial CS indexes |
|---|---|---|---|---|---|
| 0 | 0 | 12 | 2 | 0 | {0, 3} |

If the CS indexes are not enough, one way is to extend the set of initial CS indexes in Table 9.2.1-1.

Considering the first row for the Set of initial CS indexes in Table 9.2.1-1, we have {0,3}. We can say users belongs to two groups, one associated to CS 0, and the other one, 3.

The extension could be based on Msg A properties. For example, group 0 is extended to 0,2,4 and 3 is extended to 1,3,5, where these is a one-to-one mapping between CS indexes and Msg A properties.

**In all above embodiments 2a-2c,** the N UEs and N resources can be mapped in a predetermined way specified in the standard specifications.

**Embodiment 3.** Require that only one UE can be targeted in one successRAR/fallbackRAR if HARQ ACK is expected, otherwise no HARQ feedback is allowed. Whether a successRAR/fallbackRAR targets a single UE or multiple UEs may be indicated in the DCI conveying the DL scheduling allocation for the successRAR/fallbackRAR, or in header information in the successRAR/fallbackRAR or the UE may discover it when parsing the information records included in the successRAR/fallbackRAR (e.g. looking at the E bits, which indicate whether another information record (for another UE) will follow or not). Note that in order for the alternatives where the UE finds the information in the successRAR/-fallbackRAR to work, the UEs should use the HARQ feedback principle where a UE only transmits HARQ ACK after successful reception/decoding of the succsesRAR/fallbackRAR and determined successful contention resolution and otherwise remains silent (i.e. not transmit any HARQ feedback at all). Static configuration via the system information may also be used or it may even be determined by standard specifications.

**Embodiment 4.** In this embodiment, the previously described HARQ feedback principle where a UE only transmits HARQ ACK after successful reception/decoding of the succsesRAR/fallbackRAR and determined successful contention resolution and otherwise remains silent (i.e. the UE does not transmit any HARQ feedback at all) is assumed to be used. Note that since the successRAR/fallbackRAR is successfully received/decoded before the UE transmits any HARQ feedback, the UE will have received the TA information and with thus be able transmit the HARQ feedback with the correct timing advance (TA). If no feedback is received by the gNB, the gNB assumes that the succesRAR/fallbackRAR is not correctly decoded by the UE corresponding to the PUCCH resource on which the gNB tries to decode the ACK bit.

Leveraging again the assumed HARQ feedback principle, which implies that the UE will have received all the information in the successRAR/fallbackRAR before transmitting any HARQ feedback on the PUCCH, in this embodiment, the PUCCH resource can be configured in the successRAR/fallbackRAR information, e.g. in the information record (possibly denoted sub-PDU) for each targeted UE. E.g. if 3 information records/sub-PDUs are multiplexed in one successRAR/fallbackRAR for 3 UEs, the PUCCH resource set configuration within a slot and/or the slot level offset can be configured in the information records/sub-PDUs for each UE respectively.

**HARQ feedback on PUSCH**

**In some embodiments,** the HARQ feedback on successRAR/fallbackRAR can be transmitted on a PUSCH resource instead of a PUCCH resource, where the PUSCH resource can be granted in the PDCCH DCI containing the scheduling allocation for the successRAR/fallbackRAR or in the successRAR/fallbackRAR itself (i.e. in the PDSCH transmission) with similar methods as provided in section 5.1 and 5.2.

In case the scheduling information is carried in the SuccessRAR/FallbackRAR, a common header for the multiplexed SuccessRARs/FallbackRARs can be used. The scheduling information contains both resource and indication of which part(bit) within the PUSCH resource should be used for feedback of each individual SuccessRAR/FallbackRAR.

With this method, the HARQ feedback can be provided while allowing some (typically small) amount of instant data transmission with this PUSCH resource granted.

In some embodiment, the PUSCH is a retransmission of msgA PUSCH.

**In some embodiments,** msgB may be scheduled by a PDCCH containing an RNTI identifying the PDSCH carrying msgB as containing a single successRAR/fallbackRAR. The RNTI may for example be a C-RNTI or an RNTI using a UE ID that was carried in a corresponding msgA or a msgB RNTI. In this case, if a UL grant is given that corresponds to symbols where HARQ feedback should be transmitted, the UE will transmit HARQ feedback in PUSCH according to Rel-15 procedures that carry UCI on PUSCH. Because the UE receives the grant in PDCCH, it may transmit either an ACK or NACK corresponding to when it does or does not decode the PDSCH.

In cases where the PUSCH resource for HARQ is given in PDSCH, the UE does not transmit a NACK, since a successful decode of PDSCH is required to determine the PUSCH resource for HARQ feedback, and therefore the UE can't determine resources that would carry a NACK from the PDSCH. Therefore, the UE transmits an ACK or does not transmit HARQ feedback when the PUSCH resource for HARQ is given in PDSCH. In these cases where only ACK is transmitted, when msgB contains multiple successRARs/fallbackRARs and each identifies HARQ feedback resource to be used on PUSCH, all UEs addressed by the RARs will have successfully decoded the HARQ feedback resource allocation, and so these UEs can indicate HARQ feedback on different PUSCH resources for their corresponding RAR when it is multiplexed into a single PDSCH.

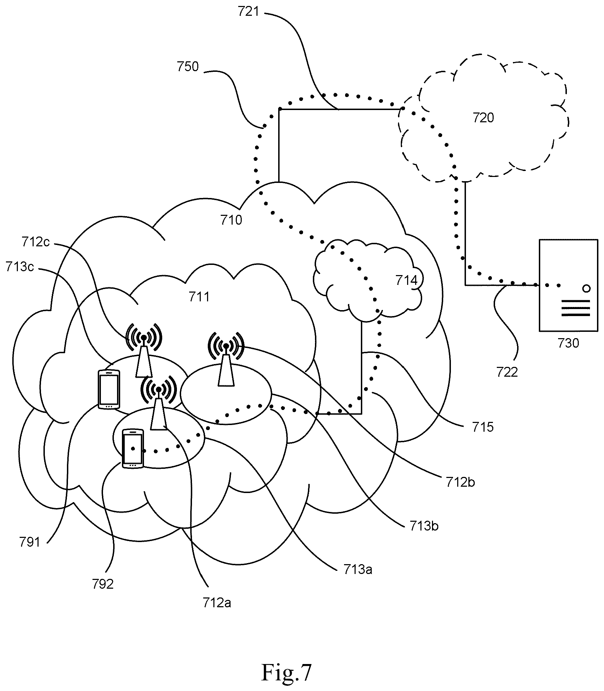

Fig. 7 is a block diagram illustrating a telecommunication network connected via an intermediate network to a host computer in accordance with some embodiments of the present disclosure.

With reference to Fig. 7, in accordance with an embodiment, a communication system includes a telecommunication network 710, such as a 3GPP-type cellular network, which comprises an access network 711, such as a radio access network, and a core network 714. The access network 711 comprises a plurality of base stations 712a, 712b, 712c, such as NBs, eNBs, gNBs or other types of wireless access points, each defining a corresponding coverage area 713a, 713b, 713c. Each base station 712a, 712b, 712c is connectable to the core network 714 over a wired or wireless connection 715. A first UE 791 located in a coverage area 713c is configured to wirelessly connect to, or be paged by, the corresponding base station 712c. A second UE 792 in a coverage area 713a is wirelessly connectable to the corresponding base station 712a. While a plurality of UEs 791, 792 are illustrated in this example, the disclosed embodiments are equally applicable to a situation where a sole UE is in the coverage area or where a sole UE is connecting to the corresponding base station 712.

The telecommunication network 710 is itself connected to a host computer 730, which may be embodied in the hardware and/or software of a standalone server, a cloud-implemented server, a distributed server or as processing resources in a server farm. The host computer 730 may be under the ownership or control of a service provider, or may be operated by the service provider or on behalf of the service provider. Connections 721 and 722 between the telecommunication network 710 and the host computer 730 may extend directly from the core network 714 to the host computer 730 or may go via an optional intermediate network 720. An intermediate network 720 may be one of, or a combination of more than one of, a public, private or hosted network; the intermediate network 720, if any, may be a backbone network or the Internet; in particular, the intermediate network 720 may comprise two or more sub-networks (not shown).

The communication system of Fig. 7 as a whole enables connectivity between the connected UEs 791, 792 and the host computer 730. The connectivity may be described as an over-the-top (OTT) connection 750. The host computer 730 and the connected UEs 791, 792 are configured to communicate data and/or signaling via the OTT connection 750, using the access network 711, the core network 714, any intermediate network 720 and possible further infrastructure (not shown) as intermediaries. The OTT connection 750 may be transparent in the sense that the participating communication devices through which the OTT connection 750 passes are unaware of routing of uplink and downlink communications. For example, the base station 712 may not or need not be informed about the past routing of an incoming downlink communication with data originating from the host computer 730 to be forwarded (e.g., handed over) to a connected UE 791. Similarly, the base station 712 need not be aware of the future routing of an outgoing uplink communication originating from the UE 791 towards the host computer 730.

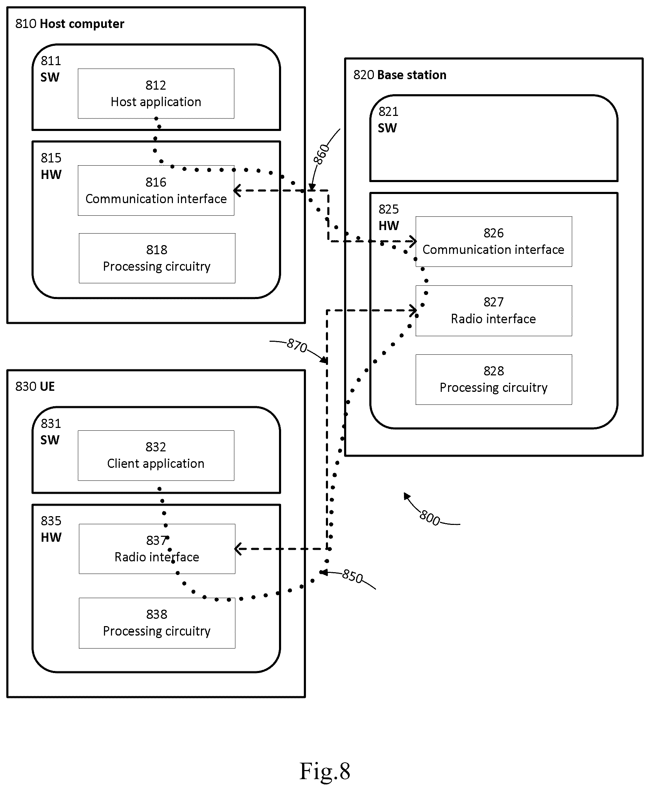

Fig. 8 is a block diagram illustrating a host computer communicating via a base station with a UE over a partially wireless connection in accordance with some embodiments of the present disclosure.

Example implementations, in accordance with an embodiment, of the UE, base station and host computer discussed in the preceding paragraphs will now be described with reference to Fig. 8. In a communication system 800, a host computer 810 comprises hardware 815 including a communication interface 816 configured to set up and maintain a wired or wireless connection with an interface of a different communication device of the communication system 800. The host computer 810 further comprises a processing circuitry 818, which may have storage and/or processing capabilities. In particular, the processing circuitry 818 may comprise one or more programmable processors, application-specific integrated circuits, field programmable gate arrays or combinations of these (not shown) adapted to execute instructions. The host computer 810 further comprises software 811, which is stored in or accessible by the host computer 810 and executable by the processing circuitry 818. The software 811 includes a host application 812. The host application 812 may be operable to provide a service to a remote user, such as UE 830 connecting via an OTT connection 850 terminating at the UE 830 and the host computer 810. In providing the service to the remote user, the host application 812 may provide user data which is transmitted using the OTT connection 850.

The communication system 800 further includes a base station 820 provided in a telecommunication system and comprising hardware 825 enabling it to communicate with the host computer 810 and with the UE 830. The hardware 825 may include a communication interface 826 for setting up and maintaining a wired or wireless connection with an interface of a different communication device of the communication system 800, as well as a radio interface 827 for setting up and maintaining at least a wireless connection 870 with the UE 830 located in a coverage area (not shown in Fig. 8) served by the base station 820. The communication interface 826 may be configured to facilitate a connection 860 to the host computer 810. The connection 860 may be direct or it may pass through a core network (not shown in Fig. 8) of the telecommunication system and/or through one or more intermediate networks outside the telecommunication system. In the embodiment shown, the hardware 825 of the base station 820 further includes a processing circuitry 828, which may comprise one or more programmable processors, application-specific integrated circuits, field programmable gate arrays or combinations of these (not shown) adapted to execute instructions. The base station 820 further has software 821 stored internally or accessible via an external connection.

The communication system 800 further includes the UE 830 already referred to. Its hardware 835 may include a radio interface 837 configured to set up and maintain a wireless connection 870 with a base station serving a coverage area in which the UE 830 is currently located. The hardware 835 of the UE 830 further includes a processing circuitry 838, which may comprise one or more programmable processors, application-specific integrated circuits, field programmable gate arrays or combinations of these (not shown) adapted to execute instructions. The UE 830 further comprises software 831, which is stored in or accessible by the UE 830 and executable by the processing circuitry 838. The software 831 includes a client application 832. The client application 832 may be operable to provide a service to a human or non-human user via the UE 830, with the support of the host computer 810. In the host computer 810, an executing host application 812 may communicate with the executing client application 832 via the OTT connection 850 terminating at the UE 830 and the host computer 810. In providing the service to the user, the client application 832 may receive request data from the host application 812 and provide user data in response to the request data. The OTT connection 850 may transfer both the request data and the user data. The client application 832 may interact with the user to generate the user data that it provides.

It is noted that the host computer 810, the base station 820 and the UE 830 illustrated in Fig. 8 may be similar or identical to the host computer 730, one of base stations 712a, 712b, 712c and one of UEs 791, 792 of Fig. 7, respectively. This is to say, the inner workings of these entities may be as shown in Fig. 8 and independently, the surrounding network topology may be that of Fig. 7.

In Fig. 8, the OTT connection 850 has been drawn abstractly to illustrate the communication between the host computer 810 and the UE 830 via the base station 820, without explicit reference to any intermediary devices and the precise routing of messages via these devices. Network infrastructure may determine the routing, which it may be configured to hide from the UE 830 or from the service provider operating the host computer 810, or both. While the OTT connection 850 is active, the network infrastructure may further take decisions by which it dynamically changes the routing (e.g., on the basis of load balancing consideration or reconfiguration of the network).

Wireless connection 870 between the UE 830 and the base station 820 is in accordance with the teachings of the embodiments described throughout this disclosure. One or more of the various embodiments improve the performance of OTT services provided to the UE 830 using the OTT connection 850, in which the wireless connection 870 forms the last segment. More precisely, the teachings of these embodiments may improve the latency, and thereby provide benefits such as lower complexity, reduced time required to access a cell, better responsiveness, etc.

A measurement procedure may be provided for the purpose of monitoring data rate, latency and other factors on which the one or more embodiments improve. There may further be an optional network functionality for reconfiguring the OTT connection 850 between the host computer 810 and the UE 830, in response to variations in the measurement results. The measurement procedure and/or the network functionality for reconfiguring the OTT connection 850 may be implemented in software 811 and hardware 815 of the host computer 810 or in software 831 and hardware 835 of the UE 830, or both. In embodiments, sensors (not shown) may be deployed in or in association with communication devices through which the OTT connection 850 passes; the sensors may participate in the measurement procedure by supplying values of the monitored quantities exemplified above, or supplying values of other physical quantities from which the software 811, 831 may compute or estimate the monitored quantities. The reconfiguring of the OTT connection 850 may include message format, retransmission settings, preferred routing etc.; the reconfiguring need not affect the base station 820, and it may be unknown or imperceptible to the base station 820. Such procedures and functionalities may be known and practiced in the art. In certain embodiments, measurements may involve proprietary UE signaling facilitating the host computer 810's measurements of throughput, propagation times, latency and the like. The measurements may be implemented in that the software 811 and 831 causes messages to be transmitted, in particular empty or 'dummy' messages, using the OTT connection 850 while it monitors propagation times, errors etc.

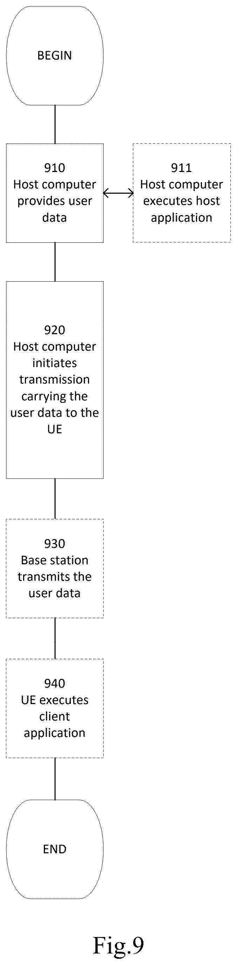

Fig. 9 is a flowchart illustrating a method implemented in a communication system, in accordance with an embodiment. The communication system includes a host computer, a base station and a UE which may be those described with reference to Fig. 7 and Fig. 8. For simplicity of the present disclosure, only drawing references to Fig. 9 will be included in this section. In step 910, the host computer provides user data. In substep 911 (which may be optional) of step 910, the host computer provides the user data by executing a host application. In step 920, the host computer initiates a transmission carrying the user data to the UE. In step 930 (which may be optional), the base station transmits to the UE the user data which was carried in the transmission that the host computer initiated, in accordance with the teachings of the embodiments described throughout this disclosure. In step 940 (which may also be optional), the UE executes a client application associated with the host application executed by the host computer.

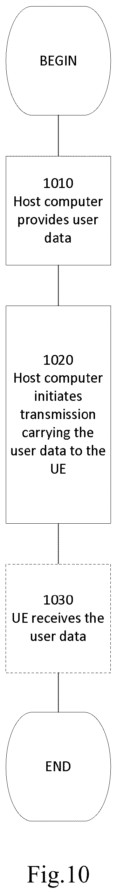

Fig. 10 is a flowchart illustrating a method implemented in a communication system, in accordance with an embodiment. The communication system includes a host computer, a base station and a UE which may be those described with reference to Fig. 7 and Fig. 8. For simplicity of the present disclosure, only drawing references to Fig. 10 will be included in this section. In step 1010 of the method, the host computer provides user data. In an optional substep (not shown) the host computer provides the user data by executing a host application. In step 1020, the host computer initiates a transmission carrying the user data to the UE. The transmission may pass via the base station, in accordance with the teachings of the embodiments described throughout this disclosure. In step 1030 (which may be optional), the UE receives the user data carried in the transmission.

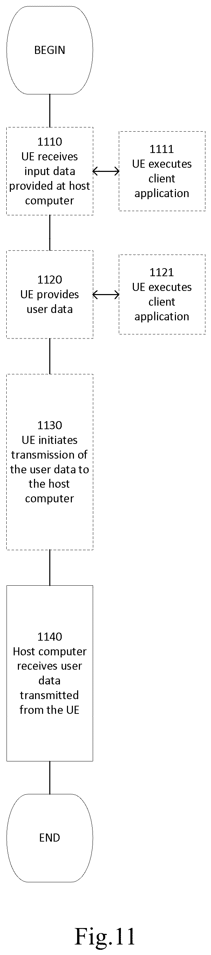

Fig. 11 is a flowchart illustrating a method implemented in a communication system, in accordance with an embodiment. The communication system includes a host computer, a base station and a UE which may be those described with reference to Fig. 7 and Fig. 8. For simplicity of the present disclosure, only drawing references to Fig. 11 will be included in this section. In step 1110 (which may be optional), the UE receives input data provided by the host computer. Additionally or alternatively, in step 1120, the UE provides user data. In substep 1121 (which may be optional) of step 1120, the UE provides the user data by executing a client application. In substep 1111 (which may be optional) of step 1110, the UE executes a client application which provides the user data in reaction to the received input data provided by the host computer. In providing the user data, the executed client application may further consider user input received from the user. Regardless of the specific manner in which the user data was provided, the UE initiates, in substep 1130 (which may be optional), transmission of the user data to the host computer. In step 1140 of the method, the host computer receives the user data transmitted from the UE, in accordance with the teachings of the embodiments described throughout this disclosure.

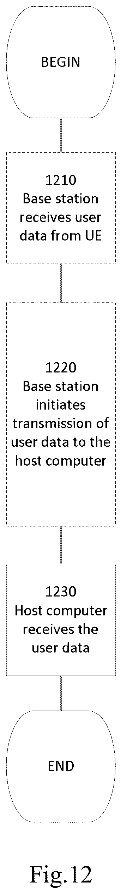

Fig. 12 is a flowchart illustrating a method implemented in a communication system, in accordance with an embodiment. The communication system includes a host computer, a base station and a UE which may be those described with reference to Fig. 7 and Fig. 8. For simplicity of the present disclosure, only drawing references to Fig. 12 will be included in this section. In step 1210 (which may be optional), in accordance with the teachings of the embodiments described throughout this disclosure, the base station receives user data from the UE. In step 1220 (which may be optional), the base station initiates transmission of the received user data to the host computer. In step 1230 (which may be optional), the host computer receives the user data carried in the transmission initiated by the base station.

According to some exemplary embodiments, there is provided a method implemented in a communication system which may include a host computer, a base station and a UE. The method may comprise providing user data at the host computer. Optionally, the method may comprise, at the host computer, initiating a transmission carrying the user data to the UE via a cellular network comprising the base station which may perform any step of the exemplary method 510 as describe with respect to Fig. 5A.

According to some exemplary embodiments, there is provided a communication system including a host computer. The host computer may comprise processing circuitry configured to provide user data, and a communication interface configured to forward the user data to a cellular network for transmission to a UE. The cellular network may comprise a base station having a radio interface and processing circuitry. The base station's processing circuitry may be configured to perform any step of the exemplary method 510 as describe with respect to Fig. 5A.

According to some exemplary embodiments, there is provided a method implemented in a communication system which may include a host computer, a base station and a UE. The method may comprise providing user data at the host computer. Optionally, the method may comprise, at the host computer, initiating a transmission carrying the user data to the UE via a cellular network comprising the base station. The UE may perform any step of the exemplary method 410 as describe with respect to Fig. 4A.

According to some exemplary embodiments, there is provided a communication system including a host computer. The host computer may comprise processing circuitry configured to provide user data, and a communication interface configured to forward user data to a cellular network for transmission to a UE. The UE may comprise a radio interface and processing circuitry. The UE's processing circuitry may be configured to perform any step of the exemplary method 410 as describe with respect to Fig. 4A.

According to some exemplary embodiments, there is provided a method implemented in a communication system which may include a host computer, a base station and a UE. The method may comprise, at the host computer, receiving user data transmitted to the base station from the UE which may perform any step of the exemplary method 410 as describe with respect to Fig. 4A.

According to some exemplary embodiments, there is provided a communication system including a host computer. The host computer may comprise a communication interface configured to receive user data originating from a transmission from a UE to a base station. The UE may comprise a radio interface and processing circuitry. The UE's processing circuitry may be configured to perform any step of the exemplary method 410 as describe with respect to Fig. 4A.

According to some exemplary embodiments, there is provided a method implemented in a communication system which may include a host computer, a base station and a UE. The method may comprise, at the host computer, receiving, from the base station, user data originating from a transmission which the base station has received from the UE. The base station may perform any step of the exemplary method 510 as describe with respect to Fig. 5A.

According to some exemplary embodiments, there is provided a communication system which may include a host computer. The host computer may comprise a communication interface configured to receive user data originating from a transmission from a UE to a base station. The base station may comprise a radio interface and processing circuitry. The base station's processing circuitry may be configured to perform any step of the exemplary method 510 as describe with respect to Fig. 5A.

In general, the various exemplary embodiments may be implemented in hardware or special purpose chips, circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, random access memory (RAM), etc. As will be appreciated by one of skill in the art, the function of the program modules may be combined or distributed as desired in various embodiments. In addition, the function may be embodied in whole or partly in firmware or hardware equivalents such as integrated circuits, field programmable gate arrays (FPGA), and the like.

The present disclosure includes any novel feature or combination of features disclosed herein either explicitly or any generalization thereof. Various modifications and adaptations to the foregoing exemplary embodiments of this disclosure may become apparent to those skilled in the relevant arts in view of the foregoing description, when read in conjunction with the accompanying drawings. However, any and all modifications will still fall within the scope of the non-limiting and exemplary embodiments of this disclosure.

## Claims

1. A method (410) performed by a terminal device, comprising:

   receiving (412) resource configuration information from a network node; and
   determining (414) an uplink, UL, resource for a feedback to a response message from the network node in a two-step random access procedure, based on the received resource configuration information.

2. The method according to claim 1, further comprises: transmitting (416) the feedback on the determined UL resource.

3. The method according to claim 1 or 2, wherein the resource configuration information comprises at least one of: at least one parameter of a broadcast message, at least one parameter of Physical Downlink Control Channel, PDCCH, at least one parameter of Physical Downlink Shared Channel, PDSCH, and at least one parameter of the response message.

4. The method according to any of claims 1-3, wherein the feedback comprises a Hybrid Automatic Repeat request, HARQ, feedback; and/or wherein the UL resource is a Physical Uplink Control Channel, PUCCH, resource.

5. The method according to claim 4, wherein the response message comprises two or more responses which are multiplexed, the two or more responses comprise at least one of a success response and a fallback response.

6. The method according to claim 5, wherein the resource configuration information comprises at least one set of Downlink Control Information, DCI, parameters.

7. The method according to claim 6, wherein each set of DCI parameters is preceded by a bit indicating a presence of the set of DCI parameters.

8. The method according to claim 5, wherein the feedbacks of the two or more terminal devices are able to be identified by at least one of the following:

    Demodulation Reference Signals;
    an order of inclusion of the two or more terminal devices' respective information records in the response message;
    a preamble identifier, ID;
    a Physical Uplink Shared Channel, PUSCH, resource unit;
    a contention resolution ID; and
    a terminal device ID.

9. The method according to claim 4, wherein the response message comprises one success response or fallback response, and the resource configuration information comprises at least one of the following:

    at least one DCI parameter; and
    at least one parameter of a broadcast message.

10. The method according to claim 9, wherein the resource configuration information comprises at least one of the following:

    (a) a PUCCH resource indicator, and a PDSCH-to-HARQ_feedback timing indicator;
    (b) a PDSCH-to-HARQ_feedback timing indicator, and a pucch-ResourceCommon configuration;
    (c) a pucch-ResourceCommon information element; and
    (d) a response window size, and a system frame number.

11. The method according to any of claims 1-10, wherein the response is a random access response.

12. A method (510) performed by a network node, comprising:

    determining (512) resource configuration information, which indicates an UL resource for a feedback of a terminal device to a response message in a two-step random access procedure; and
    transmitting (514) the resource configuration information to the terminal device.

13. The method according to claim 12, further comprises: receiving (516) a feedback on the UL resource which is determined by the terminal device.

14. A terminal device (600), comprising:

    one or more processors (601); and
    one or more memories (602) comprising computer program codes (603),

the one or more memories (602) and the computer program codes (603) being configured to, with the one or more processors (601), cause the terminal device (600) at least to:

receive resource configuration information from a network node; and
determine an UL resource for a feedback to a response message from the network node in a two-step random access procedure, based on the received resource configuration information.

15. A network node (600), comprising:

one or more processors (601); and
one or more memories (602) comprising computer program codes (603),
the one or more memories (602) and the computer program codes (603) being configured to, with the one or more processors (601), cause the network node (600) at least to:

determine resource configuration information, which indicates an UL resource for a feedback of a terminal device to a response message in a two-step random access procedure; and
transmit the resource configuration information to the terminal device.

| | 101 SS/PBCH block: PSS, SSS, PBCH |
| | 102 System information (RMSI, OSI) |
| | 103 PRACH (Physical Random Access Channel, msg1) |
| | 104 RAR (Random Access Response, msg2) |
| | 105 PUSCH (Physical Uplink Shared Channel, msg3) |
| | 106 CRM (Contention Resolution Message, msg4) |

Fig.1A

| | 201 SS/PBCH block: PSS, SSS, PBCH |
| | 202 System information (RMSI, OSI) |
| | 203a msgA: Preamble |
| | 203b msgA: PUSCH |
| | 204 msgB |

Fig.1B

Fig.2A

Fig.2B

Fig.2C

| Success RAR UE1 | Success RAR UE2 | Success RAR UE3 |

| RRC UE1 | RRC UE2 | RRC UE3 |

1 MAC PDU

1 MAC PDU    1 MAC PDU    1 MAC PDU

Scheduled in a later slot

Fig.2D

| Index | PUCCH format | First symbol | Number of symbols | PRB offset $RB_{BWP}^{offset}$ | Set of initial CS indexes |
|-------|--------------|--------------|-------------------|--------------------------------|---------------------------|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\lfloor N_{BWP}^{size}/4 \rfloor$ | {0, 3, 6, 9} |

Fig.3A

| PDSCH-to-HARQ_feedback timing indicator | | | Number of slots $k$ |
|---|---|---|---|
| 1 bit | 2 bits | 3 bits | |
| '0' | '00' | '000' | 1st value provided by *dl-DataToUL-ACK* |
| '1' | '01' | '001' | 2nd value provided by *dl-DataToUL-ACK* |
| | '10' | '010' | 3rd value provided by *dl-DataToUL-ACK* |
| | '11' | '011' | 4th value provided by *dl-DataToUL-ACK* |
| | | '100' | 5th value provided by *dl-DataToUL-ACK* |
| | | '101' | 6th value provided by *dl-DataToUL-ACK* |
| | | '110' | 7th value provided by *dl-DataToUL-ACK* |
| | | '111' | 8th value provided by *dl-DataToUL-ACK* |

Fig.3B

<u>410</u>

```
┌─────────────────────────────────────────────┐
│  receive resource configuration information   │  412
│  from a network node                          │
└─────────────────────────────────────────────┘
                      │
┌─────────────────────────────────────────────┐
│  determine an uplink resource for a feedback  │  414
│  to a response message from the network node  │
│  in a two-step random access procedure,       │
│  based on the received resource configuration │
│  information                                  │
└─────────────────────────────────────────────┘
```

Fig.4A

414

```
┌─────────────────────────────────────────────┐
│                                               │  416
│  transmit the feedback on the determined UL   │
│  resource                                     │
└─────────────────────────────────────────────┘
```

Fig.4B

510

determine resource configuration information  512

transmit the resource configuration information to the terminal device  514

## Fig.5A

514

receive a feedback on the UL resource  516

## Fig.5B

600

APPARATUS

601                         602

PROCESSOR  ←→  MEMORY

603

Fig.6A

terminal device 600b

Receiving Unit
602b

Determining Unit
604b

Fig.6B

Base Station 600c

Determining Unit
602c

Transmitting Unit
604c

Fig.6C

Fig.7

810 **Host computer**

811
SW

812
Host application

815
HW

816
Communication interface

818
Processing circuitry

820 **Base station**

821
SW

825
HW

826
Communication interface

827
Radio interface

828
Processing circuitry

860

870

800

830 **UE**

831
SW

832
Client application

835
HW

837
Radio interface

838
Processing circuitry

850

Fig.8

BEGIN

910
Host computer
provides user
data

911
Host computer
executes host
application

920
Host computer
initiates
transmission
carrying the
user data to the
UE

930
Base station
transmits the
user data

940
UE executes
client
application

END

Fig.9

BEGIN

1010
Host computer
provides user
data

1020
Host computer
initiates
transmission
carrying the
user data to the
UE

1030
UE receives the
user data

END

Fig.10

BEGIN

1110
UE receives
input data
provided at host
computer

1111
UE executes
client
application

1120
UE provides
user data

1121
UE executes
client
application

1130
UE initiates
transmission of
the user data to
the host
computer

1140
Host computer
receives user
data
transmitted
from the UE

END

Fig.11

BEGIN

1210
Base station
receives user
data from UE

1220
Base station
initiates
transmission of
user data to the
host computer

1230
Host computer
receives the
user data

END

Fig.12

## EUROPEAN SEARCH REPORT

**Application Number**

EP 26 15 6487

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NOKIA ET AL: "On 2-step RACH Procedure", 3GPP DRAFT; R1-1906747 ON 2-STEP RACH PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20190513 - 20190517 13 May 2019 (2019-05-13), XP051728198, Retrieved from the Internet: URL:http://www.3gpp.org/ftp/Meetings%5F3GPP%5FSYNC/RAN1/Docs/R1%2D1906747%2Ezip [retrieved on 2019-05-13] * paragraph [02.2] - paragraph [02.3]; figure 2 * * paragraph [02.4] * | 1-15 | INV. H04L1/1829 H04L5/00 H04W74/06 H04W74/0836 |
| A | CN 109 983 829 A (BEIJING XIAOMI MOBILE SOFTWARE CO LTD) 5 July 2019 (2019-07-05) * paragraph [0136] - paragraph [0160] * * paragraph [0165] - paragraph [0194] * * claims 1-31 * * figures 1-10 * | 1-15 | |

TECHNICAL FIELDS SEARCHED (IPC)

H04L
H04W

The present search report has been drawn up for all claims

| Place of search | Date of completion of the search | Examiner |
|---|---|---|
| The Hague | 12 February 2026 | Orfanos, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 26 15 6487

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2026

| Patent document cited in search report | | Publication date | Patent family member(s) | | Publication date |
|---|---|---|---|---|---|
| CN 109983829 | A | 05-07-2019 | CN | 109983829 A | 05-07-2019 |
| | | | WO | 2020168566 A1 | 27-08-2020 |

EPO FORM P0459

For more details about this annex : see Official Journal of the European Patent Office, No. 12/82